# EUROPEAN PATENT SPECIFICATION

(11) **EP 3 881 286 B1**
(45) Date of publication and mention of the grant of the patent: **25.02.2026**
(21) Application number: 19885793.0
(22) Date of filing: 15.11.2019
(51) Int. Cl.: A47J 36/32, B65D 33/00, G06T 7/60, G06T 7/00, G06T 7/73

(54) **ESTIMATING A CHARACTERISTIC OF A FOOD ITEM**
SCHÄTZUNG EINER EIGENSCHAFT EINES NAHRUNGSMITTELS
ESTIMATION D'UNE CARACTÉRISTIQUE D'UN PRODUIT ALIMENTAIRE

(30) Priority: 16.11.2018 US 201862768776 P
(43) Date of publication of application: 22.09.2021
(73) Proprietor: Breville USA, Inc., Torrance, California 90501 (US)
(72) Inventor: BALDWIN, Douglas, Torrance, California 90501 (US)
(74) Representative: Marks & Clerk LLP
(86) International application number: PCT/IB2019/059815
(87) International publication number: WO 2020/100091

(56) References cited:
- WO-A1-2013/033442
- WO-A1-2016/179424
- US-A1- 2016 350 715
- US-A1- 2018 324 908

## Description

### RELATED APPLICATION

The current application claims priority from US Provisional Application No. 62768,776, filed 16 November 2019.

### BACKGROUND

With traditional cooking methods, heat flows from a burner to a pan then into a food item, or the elements of an oven heat the air around the food item. Because the air in the oven and the metal in the pan are much hotter than the desired internal temperature of the food, the food cooks more on the outside and the food must be removed from the heat at just the right time. Traditional cooking methods have a narrow window of time in which the food is properly heated. If the food is removed from the heat too early or too late, the food will be either over- or undercooked.

Another form of cooking is sous vide cooking where the food is sealed in a plastic bag and then placed in a hot water bath until the food reaches the desired internal temperature. The hot water bath temperature is typically much lower than used for cooking in an oven or on a stove. Although sous vide cooking does typically take longer than traditional methods, the result is moist food that is evenly cooked, ensuring that the inside is properly cooked without overcooking the outside. When cooking with water, the water temperature can be set just high enough to get the food to the preferred temperature without having to remove it from the heat at exactly the right time. Therefore, there is a much wider window of time in which the food is at the desired temperature.

In each form of cooking, a number of characteristics can impact the window of time when the heat source should be removed from the food item. For example, the thickness of a steak can impact the period of time which cooking should stop. However, certain characteristics of a food item can be difficult to accurately estimate, particularly with food items which may have irregular shapes and volumes such as a steak. If one or more of these characteristics are inaccurately estimated, the cooked food may be dry, unevenly cooked, and/or overcooked.
WO 2016/179424 discloses a connected food preparation system and a method of use. US 2018324908 discloses an in-oven camera and computer vision systems and methods. US 2016350715 discloses a nutrition based food system and a method. WO 2013/033442 discloses methods and arrangements for identifying objects.

### SUMMARY

It is an object of the present invention to substantially overcome or at least ameliorate one or more disadvantages of existing arrangements. The scope of protection is defined by the appended claims.

In a first aspect, there is provided a cooking appliance according to claim 1.

In certain embodiments, the cooking appliance further includes one or more sensors to monitor the food item during cooking, wherein the at least one processor is configured to: receive feedback data from the one or more sensors; and modify the cooking program based at least in part on the feedback data; wherein the one or more cooking components are controlled by the at least one processor according to the cooking program as modified.

In certain embodiments, the cooking appliance comprises: a sous vide device; a thermal immersion circulator; or an oven.

In certain embodiments, the cooking appliance includes a camera to capture the image data.

In certain embodiments, the image data captured by the camera includes one or more images of a sous vide bag containing the food item, the sous vide bag bearing the indicia.

In certain embodiments, the at least one processor of the computing device is configured to: determine, using at least some of the image data or a machine-readable code on the sous vide bag, a bag identifier identifying the sous vide bag; and determine, using the bag identifier and indicia data stored in the memory of the computing device, a planar representation of the indicia; wherein the at least one processor of the computing device is configured to process the image data using the planar representation of the indicia to determine the location or the distortion of the indicia in the 3D space.

In certain embodiments, the at least one processor of the computing device is configured to: record, in the memory, a status associated with the bag and indicative of the bag having been used; receive subsequent image data; determine, based on subsequent image data and the status, if the sous vide bag has previously been used; and in response to the bag having been previously used, prevent the one or more cooking components being controlled to cook the food item in the sous vide bag.

In certain embodiments, the oven includes a projector to project light on the food item thereby forming the indicia on the food item, wherein the camera captures the image data indicative of the indicia projected on the food item by the projector.

In a second aspect there is provided a computer-implemented method according to claim 8.

In certain embodiments, processing the image data includes use of a computer-vision algorithm.

In certain embodiments, the one or more characteristics of the food item include at least one of a weight, a thickness, a volume, a shape, and a surface heat transfer coefficient of the food item.

In certain embodiments, the method includes receiving one or more user input characteristics of the food item, wherein determining the one or more characteristics of the food item are further based on the one or more user input characteristics of the food item.

In certain embodiments, the method further includes generating a cooking program based at least in part on the one or more characteristics of the food item, wherein the cooking program includes at least one of a cook time and temperature.

In certain embodiments, the method further includes controlling the one or more cooking components of a cooking appliance according to the cooking program.

In certain embodiments, the method further includes: receiving feedback data from one or more sensors of the cooking appliance; and modifying the cooking program based at least in part on the feedback data; wherein the one or more cooking components are controlled by the at least one processor according to the cooking program as modified.

In certain embodiments, the cooking appliance comprises: a sous vide device, a thermal immersion circulator, or an oven.

In certain embodiments, the method includes capturing the image data using a camera of the cooking appliance or a user device.

In certain embodiments, the image data captured by the camera includes one or more images of a sous vide bag containing the food item, the sous vide bag bearing the indicia.

In certain embodiments, the method further includes: determining, using at least some of the image data or a machine-readable code on the sous vide bag, a bag identifier identifying the sous vide bag; and determining, using the bag identifier and indicia data stored in memory, a planar representation of the indicia; wherein the processing of the image data to determine a location or distortion of the indicia in three-dimensional (3D) space includes processing the image data using the planar representation of the indicia to determine the location or the distortion of the indicia in the 3D space.

In certain embodiments, the method further includes: recording a status associated with the bag identifier, the status being indicative of the bag having been used; receiving subsequent image data; determining, based on the bag identifier of the bag captured in the subsequent image data and the status, if the sous vide bag has previously been used; and in response to the bag having been previously used, preventing the one or more cooking components being controlled to cook the food item in the sous vide bag.

Other aspects and embodiments will be appreciated throughout the description.

### BRIEF DESCRIPTION OF THE DRAWINGS

Example embodiments should become apparent from the following description, which is given by way of example only, of at least one preferred but non-limiting embodiment, described in connection with the accompanying figures. The components in the drawings are not necessarily to scale. Instead, emphasis is placed on illustrating clearly the principles of the present technology.
Figure 1A is a block diagram representing an example of a computing device in accordance with an embodiment of the present technology.
Figure 1B is a block diagram representing an example of a cooking appliance in accordance with an embodiment of the present technology.
Figure 1C is a perspective view of an example of the cooking appliance of Figure 1B.
Figure 1D is a rear view of the cooking appliance of Figure 1B.
Figure 1E is a system diagram of an example of a cooking system in accordance with an embodiment of the present technology.
Figure 1F is a system diagram of an example of a cooking system in accordance with an embodiment of the present technology.
Figure 1G is a more detailed system diagram of the cooking system of Figure 1F in accordance with an embodiment of the present technology.
Figure 2A is a top view of a sous vide bag in accordance with an embodiment of the present technology.
Figure 2B is a perspective view of the sous vide bag shown in Figure 2A with a food item disposed therein.
Figure 3A is a top view of an example sous vide bag in accordance with another embodiment of the present technology.
Figure 3B is a perspective view of the sous vide bag shown in Figure 3A with a food item disposed therein.
Figure 4A is a flow diagram representing an example of a process or method performed by a cooking appliance of Figure 1B for estimating a characteristic of a food item in accordance with an embodiment of the present technology.
Figure 4B is a flow diagram representing an example of a process or method performed by a cooking system of Figure 1E for estimating a characteristic of a food item in accordance with an embodiment of the present technology.

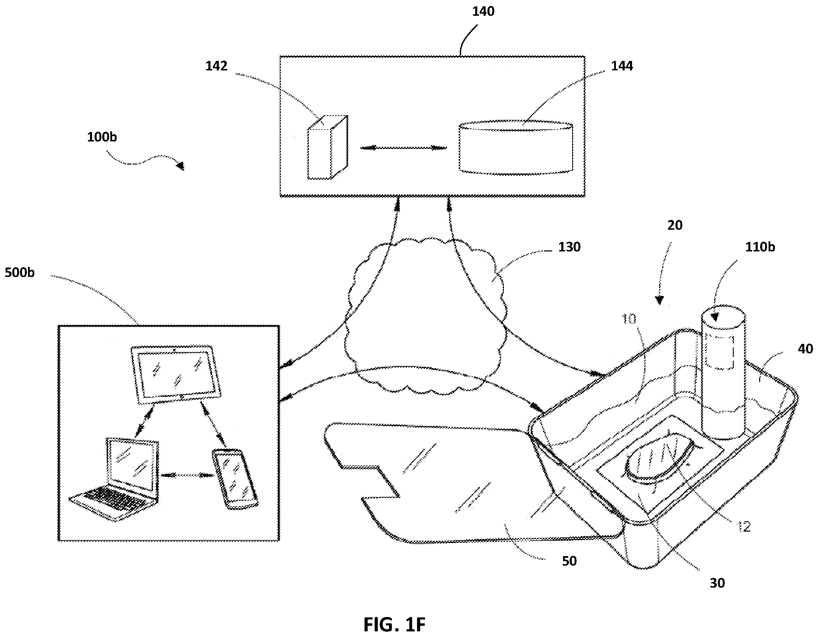

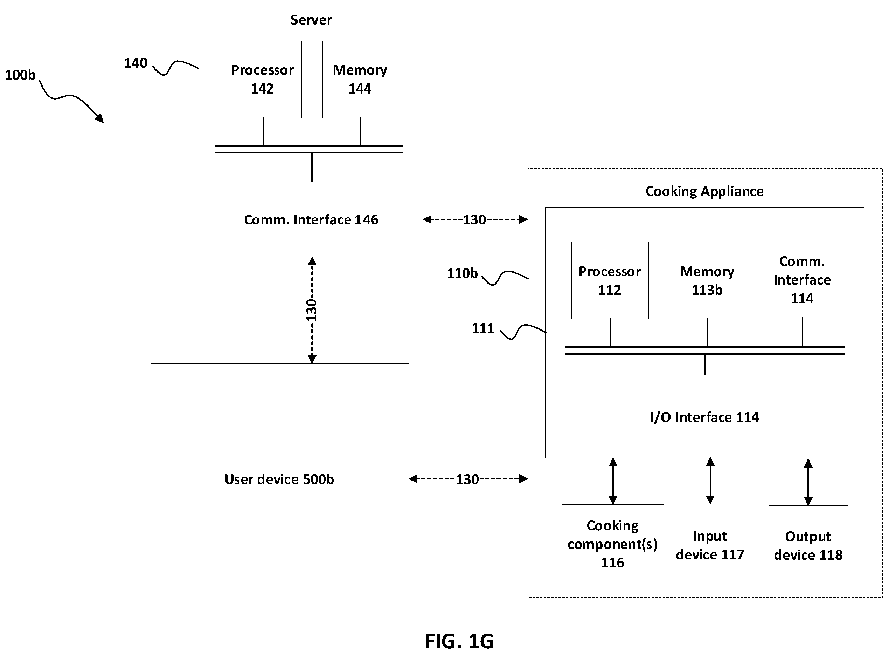

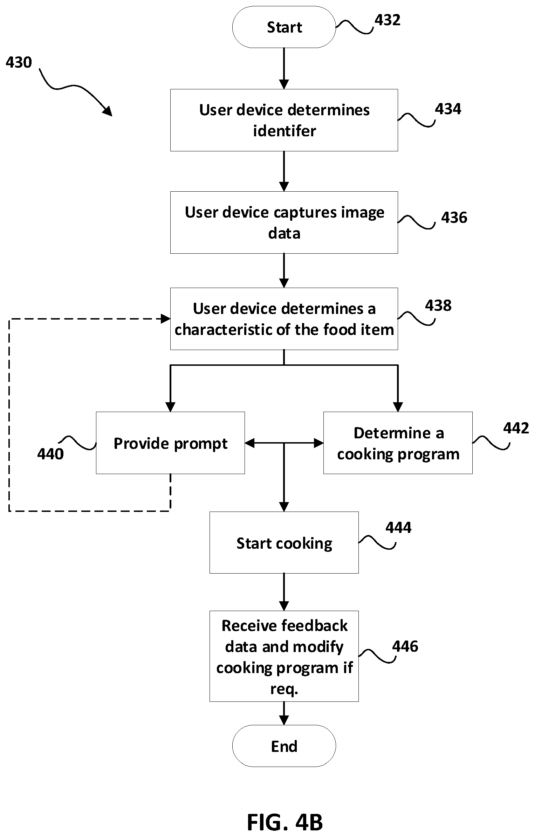

Figure 4B is a flow diagram representing an example of a process or method performed by a cooking system of Figure 1F and 1G for estimating a characteristic of a food item in accordance with an embodiment of the present technology.

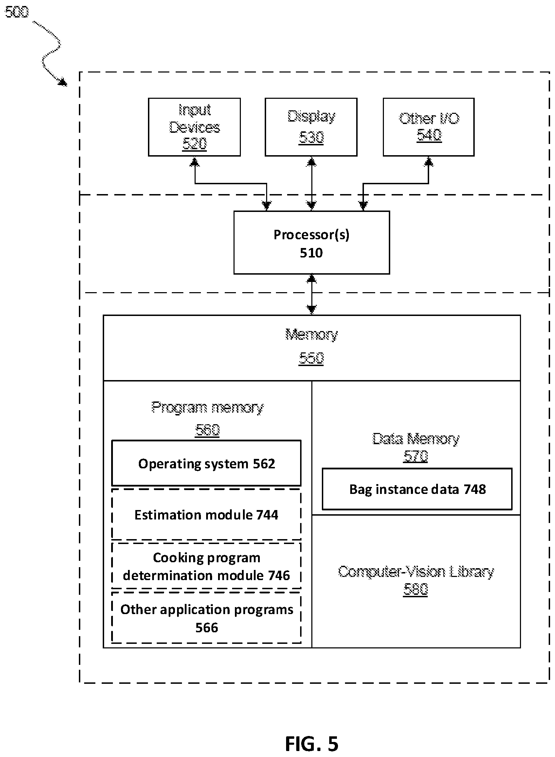

Figure 5 is a block diagram of an example user device in accordance with an embodiment of the present technology, on which some implementations of the disclosed technology can operate.

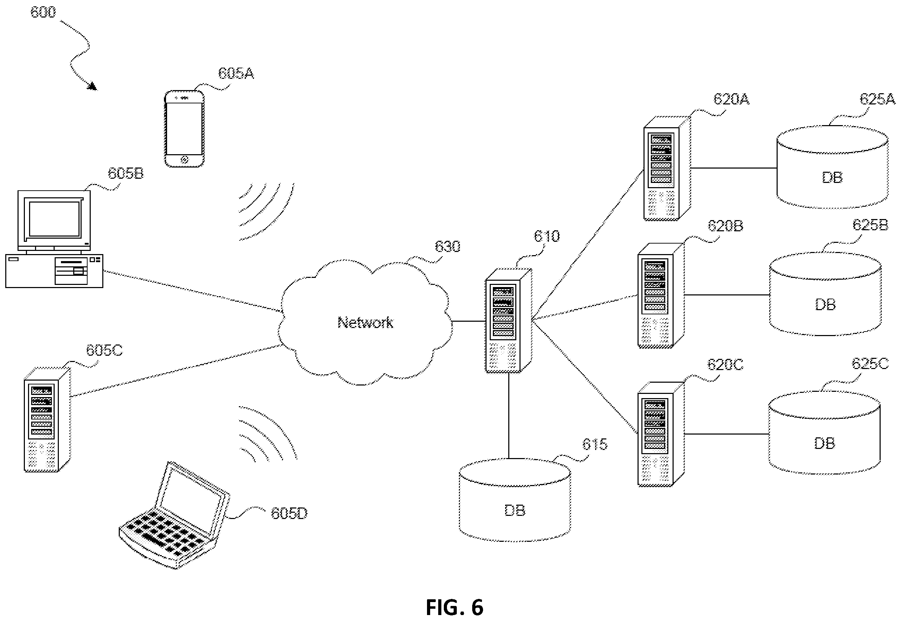

Figure 6 is a block diagram representing an example distributed computing environment in accordance with an embodiment of the present technology, in which some embodiments of the disclosed technology can operate.

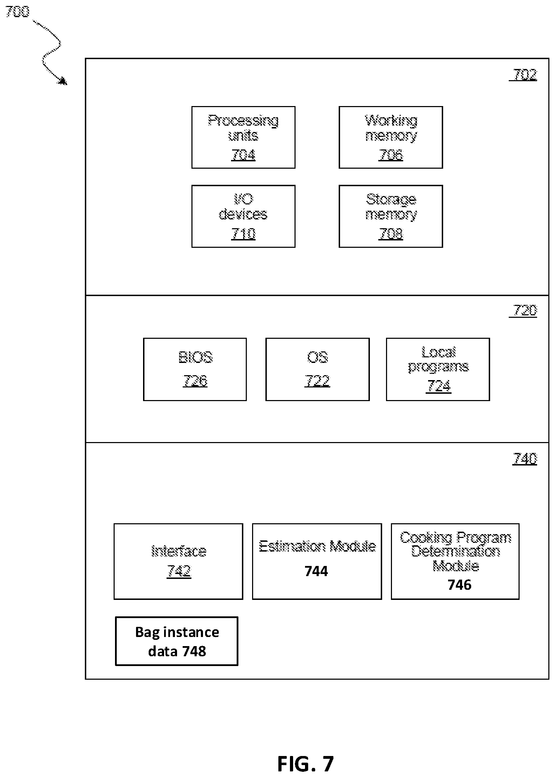

Figure 7 is a block diagram representing components which, in some embodiments, can be used in a system employing the disclosed technology.

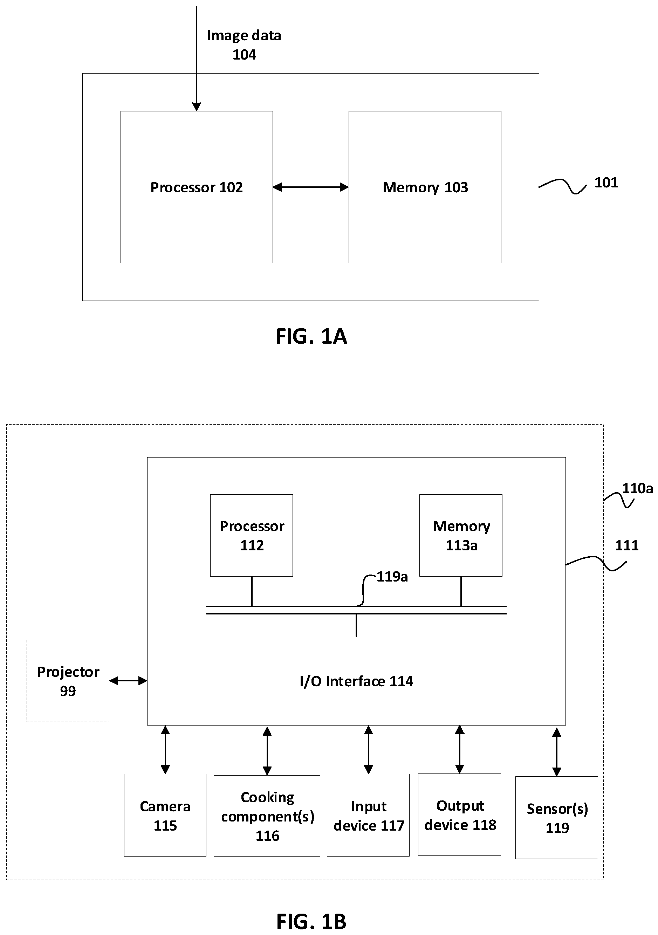

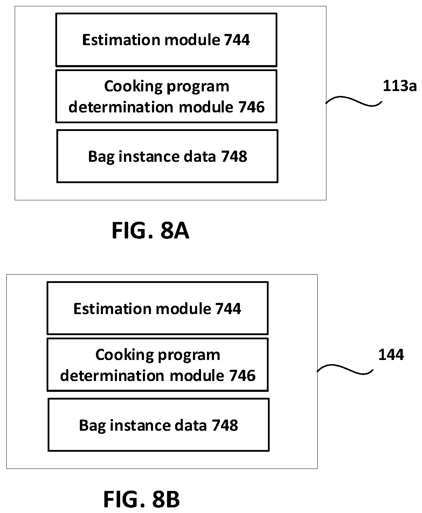

Figure 8A is block diagram representing an example of the memory of the cooking appliance of Figure 1B.
Figure 8B is a block diagram representing an example of the memory of the server processing system of the cooking system of Figures 1F and 1G.

### Detailed Description of Preferred Embodiments

Aspects of the present disclosure are directed generally toward systems and methods for estimating one or more characteristics of a food item. Image data is received which is indicative of indicia on or about a food item. The image data is processed to determine a location or distortion of the indicia in three-dimensional (3D) space. One or more characteristics of the food item are determined based at least in part on the location or distortion of the indicia.

In some embodiments, the systems and methods are directed toward estimating one or more characteristics of a food item placed within a sous vide bag. In several of the embodiments described below, a sous vide bag can include indicia printed or affixed thereon that can be imaged by an imaging device (e.g., a camera of a smartphone, tablet, or other user device). The image data can be used to estimate the one or more characteristics of a food item placed within the sous vide bag. For example, a computing device can process the image data using one or more computer vision algorithms to estimate one or more of a shape, thickness, volume, weight, type, quantity, surface heat transfer coefficient, and/or other characteristics of the food item. The image data can further be processed to estimate a distribution of a sauce within the sous vide bag, air pockets within the sous vide bag, etc. The one or more determined characteristics can be used to predict or determine a cook time, temperature, or other aspect of a sous vide cooking process, and/or to generate and send a prompt to a user device to adjust some aspect of the sous vide cooking process. For example, for a sous vide device, the water may have been preheated to a high temperature and a prompt is provided to the user to lower the cooking temperature upon determination that the food item is a steak.

In the following detailed description, specific details are set forth to provide an understanding of the present technology. However, the present technology may be practiced without some of these specific details. In some instances, well-known structures and techniques have not been shown in detail so as not to obscure the present technology. The terminology used in the description presented below is intended to be interpreted in its broadest reasonable manner, even though it is being used in conjunction with a detailed description of certain specific embodiments of the disclosure. For example, while certain aspects of the operation of the present technology are described in the context of sous vide cooking and sous vide bags, one skilled in the art will understand that the present technology is applicable to estimating physical characteristics of objects other than food items. Certain terms may even be emphasized below; however, any terminology intended to be interpreted in any restricted manner will be overtly and specifically defined as such in this Detailed Description section. The headings provided herein are for convenience only and do not necessarily affect the scope of the embodiments.

Figure 1A illustrates a block diagram representing a computerised device 101 for estimating one or more characteristics of a food item. The computerised device 101 includes at least one processor 102 and at least one non-transitory processor-readable medium 103 such as memory for storing processor-executable instructions. When the processor-executable instructions are executed the by the at least one processor 102, the processor 102 is configured to receive image data 104 indicative of indicia on or about a food item. The processor 102 is also configured to process the image data to determine a location or distortion of the indicia in three-dimensional (3D) space. The processor 102 is also configured to determine the one or more characteristics of the food item based at least in part on the location or distortion of the indicia.

Figure 1B shows a block diagram representing components of a cooking appliance 110a. The cooking appliance 110a includes a computerised device 111 configured according to computerised device 101 including at least one processor 112 and a memory 113a. In addition, the computerised device 111 includes an input/output (I/O) interface 114 which is coupled with the processor and memory via a bus 119a. The cooking appliance 110a further includes a camera 115, one or more cooking components 116, an input device 117, an output device 118, and one or more sensors 119 which are coupled to the i/o interface 114. As discussed in certain embodiments, the cooking appliance may also include a projector 99 which is coupled to the I/O interface 114.

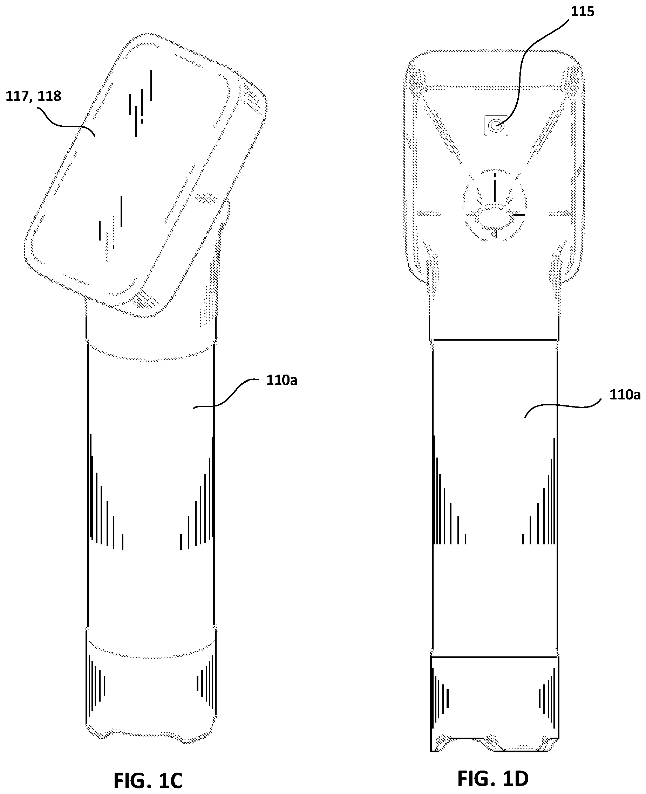

Referring to Figures 1C and 1D, the cooking appliance 110a can be provided in the form of a sous vide device which includes cooking components 116 such as an impeller and a heating element. As shown in Figures 1C and 1D, the input device 117 and output device 117 are provided in the form of a touch screen interface. As shown in Figure 1D, the sous vide device 110a includes the camera 115 to capture the image data 104. In this example, the camera 115 is provided on a rear surface of the touch screen interface 117, 118.

In the embodiment shown in Figures 1B, 1C and 1D, the instructions stored in memory 113a cause the at least one processor 112 to receive image data 104 indicative of indicia on or about a food item 12, process the image data 104 to determine a location or distortion of the indicia in three-dimensional (3D) space, and determine the one or more characteristics of the food item 12 based at least in part on the location or distortion of the indicia. In this embodiment, all processing is performed locally at the appliance 110a.

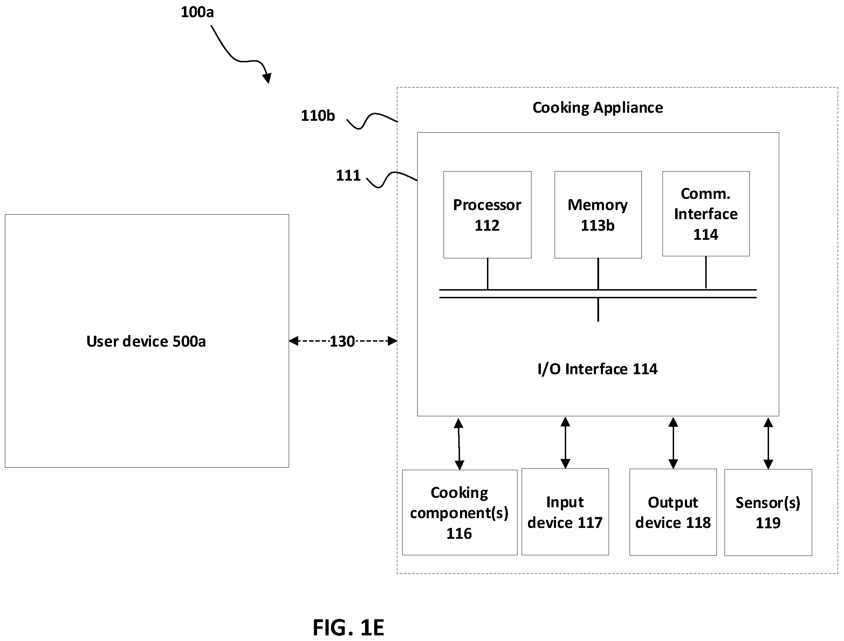

Referring to Figure 1E, there is shown a first example of a cooking system 100a. The cooking system 110a includes a cooking appliance 110b and a computing device provided in the form of a user device 500a. The user device 500a is discussed in more depth later herein. The user device 500a can include a processor 510. The cooking appliance 110b is the same as the cooking appliance 110a except the executable instructions stored in memory 113b differ to memory 113a as at least some of the functions performed by the at least one processor 102 in Figures 1B, 1C and 1D are moved to the processor of the user device 500a or at least distributed therebetween. Where appropriate, reference number "113" will be used to collectively refer to memory 113a and 113b. Furthermore, the cooking appliance 110b is the same as the cooking appliance 110a except the cooking appliance 110b does not include a camera unlike cooking appliance 110a. Where appropriate, the reference number "110" will be used to collectively refer to cooking appliances 110a and 110b. The cooking appliance 110b and user device 500a can be in wireless communication via respective communication devices. In one form, Bluetooth protocol can be used to wirelessly transfer data between the cooking appliance 110b and user device 500a.

In one example, the user device 500a can be provided in the form of a portable processing system, such as a smartphone or tablet processing system or a computer. The processor 510 of the user device 500a is configured by instructions stored in memory of the user device 500a to receive, via the camera 540, image data 104 indicative of the indicia on or about a food item 12, process the image data 104 to determine a location or distortion of the indicia in three-dimensional (3D) space, and determine the one or more characteristics of the food item 12 based at least in part on the location or distortion of the indicia. The user device 500a then generates a cooking program which is then transferred to the cooking appliance 110b for execution by the processor 112.

Referring to Figure 1F, there is shown a schematic view of a further example of a cooking system 100b. Similar to Figure 1E, the system 100b includes a cooking appliance 110b and a computing device, however the computing device is provided in the form of a server processing system 140 such as a cloud server processing system. Where appropriate, the reference number "100" will be used to collectively refer to system 100a and 100b. As shown in Figure 1G, the server processing system 140 includes one or more processors 142, one or more memory devices 144, and a communication interface 146 coupled together via a bus. The cooking appliance 110b and server processing system 140 are communicatively coupled together via one or more communication channels, such as a communication network 30.

The system 100b can also include a user device 500b (e.g., a smartphone, tablet, etc.) which can communicate with the server processing system 140 and the cooking appliance 110b via the network 30 to provide input to the system 100. The user device 500b is the same as user device 500a except that the processing and determination functions are distributed therebetween or redistributed to the server processing system 140. Where appropriate, the reference number "500" will be used to collectively refer to user device 500a and 500b. The user device 500b can act as an input device to the system 100b and in certain embodiments relays communication between the server processing system 140 and the cooking appliance 110b. In one example, the user device 500b is used to capture image data 104 using the camera 540 of the user device 500b, wherein the image data 104 can be transferred as input to the server processing system 140 for processing. In another example, a user can input into the system 100b, via the user device 500b, a desired food temperature, an acceptable temperature gradient across the food, food characteristics (e.g., type, weight, thickness, shape), container characteristics (e.g., size, shape, volume), etc. The network 30 can be a local area network (LAN) or a wide area network (WAN), but can also be other wired or wireless networks. The network 30 may be the Internet or some other public or private network. The user device 500b can be connected to network 112 through a network interface, such as by wired or wireless communication.

In the embodiment shown in Figure 1F, the instructions stored in memory 144 cause the at least one processor 142 of the server processing system 140 to receive image data 104 indicative of indicia on or about a food item 12, process the image data 104 to determine a location or distortion of the indicia in three-dimensional (3D) space, and determine the one or more characteristics of the food item 12 based at least in part on the location or distortion of the indicia. In this embodiment, all processing is performed remotely to the cooking appliance 110b.

As shown in Figure 1F, the cooking appliance 110b can include or be used with a container 40 filled with a fluid 10, such as water. The cooking appliance 110b can be provided in the form of a thermal immersion circulator or sous vide device, at least partially submerged in the fluid 10. The cooking appliance 110b can alternatively be provided in the form of an oven, pressure cooker, an electric or gas stove-top/cook-top, or other type of cooking device. The cooking appliance 110b can include or be used with a lid 50 configured to cover the container 40 to help control heat loss and evaporation of the fluid 10. In the illustrated embodiment, a food item 12, such as a steak, is placed in a resealable plastic pouch or bag 30 ("bag 30") and placed in the fluid 10. While illustrated as a single item in Figure 1F, the food item 12 can comprise multiple individual food items (e.g., two or more steaks) arranged in the bag 30. The cooking appliance 110b is configured to heat the fluid 10 to heat and cook the food item 12.

In some embodiments, the one or more food characteristics are estimated without user input via an input device. However, in some embodiments, the system 100 can receive information indicative of one or more user input characteristics of the food item 12 which is then used to estimate the one or more characteristics of the food item 12. For example, where the food item 12 is a meat, the system 100 can receive information related to species, cut, thickness, shape, weight, quantity, and the like. The information can be input by a user of the user device 500. Alternatively, some or all of the information can be automatically captured by the user device 500 or the cooking appliance 110. As described in detail below, for example, the user device 500 or cooking appliance 110 can be used to capture an image of the bag 30 and the food item 12 to generate some or all of the information indicative of the characteristics of the food item 12. The processor of the cooking appliance 110, user device 500, or server processing system 140 of the system 100 can generate a cooking program (e.g., including a cooking time, temperature, etc.) for cooking the food item 12 based at least in part on the information. The processor of the cooking appliance 110, user device 500, or server processing system 140 can generate the cooking program based on other information such as, for example, information about characteristics of the fluid 10 (e.g., a volume of the fluid 10, a starting temperature of the fluid 10, etc.), information about the dimensions of the container 104 (e.g., length, width, and/or height) and/or the container material (e.g., glass, metal, or insulated material), geographic location (e.g., GPS) information from the user device 500 (e.g., to estimate the atmospheric pressure based on an altitude of the geographic location), etc. In one form, the processor uses the computer vision algorithm to estimate the dimensions of the container, the amount of water contained in the container, wherein these cooking appliance characteristics can be used by the processor of the cooking appliance 110, user device 500, or server processing system 140 to generate the cooking program.

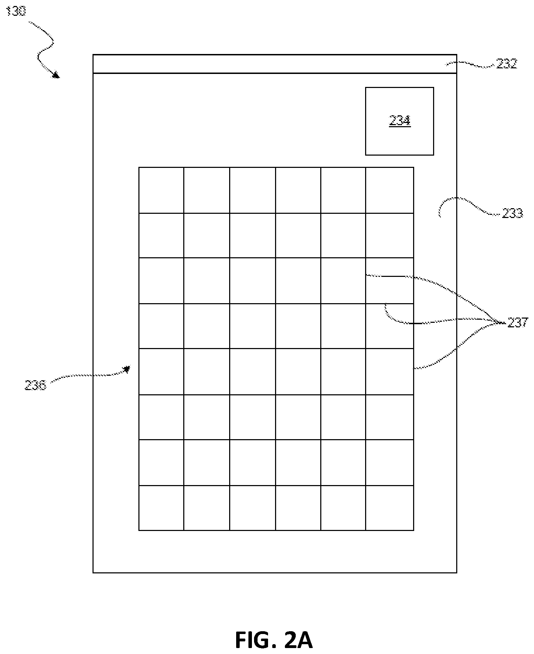

Figure 2A is a top view of the bag 30 in accordance with an embodiment of the present technology. In the illustrated embodiment, the bag 30 includes a sealing member 232 such as, for example, a single-press zip seal, a multiple-press zip seal, or other sealing member known in the art. In operation, a user can unseal the sealing member 232 to position the food item 12 within the bag 30 and then reseal the sealing member 232 to provide a fluid-tight seal before submerging the bag 30 in the fluid 10. The bag 30 can be formed of a clear, opaque, or non-clear plastic material (e.g., a polymer or laminated film). In the illustrated embodiment, the bag 30 has a generally rectangular shape while, in other embodiments, the bag 30 can have other shapes (e.g., circular, rectilinear, oval, polygonal, triangular, etc.). The bag 30 can be similar to any of the sous vide bags described in detail in U.S. Provisional Patent Application No. 62/738,786, filed 28 September 2018, and PCT Application No. IB2019/058210, filed 27 September 2019.

As further shown in Figure 2A, the bag 30 bears indicia 236 which is printed on or otherwise affixed to a first (e.g., top) surface 233 of the bag 30. In an optional form, the bag 30 also has printed or otherwise affixed thereto a machine-readable code 234. The identifier 234 and/or the indicia 236 can be printed directly on the bag 30 using a low migration ink intended for use at elevated temperatures. The identifier 234 can be a bar code, QR code, or other identifier that is scannable by the user device 500 (e.g., readable via an application running on a mobile phone or tablet) for receiving information about the bag 30. For example, the identifier 234 can link to information about a cooking program, cooking instructions, food item 12 to be cooked, recipes, manufacturing information, best-by dates, etc. The identifier 234 can be unique to the bag 30, and can include information about the indicia 236 such as the configuration or arrangement of the indicia 236. In one form, the indicia 236 can be provided in the form of a pattern which may have a repeating design. However, there is no requirement that the indicia 236 need have a repeating design.

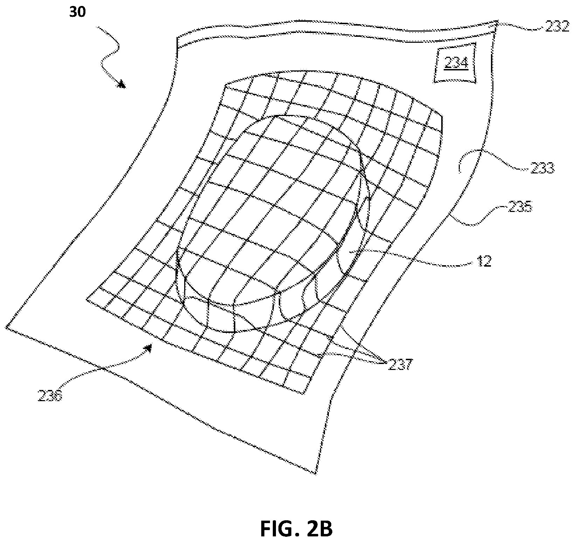

Figure 2B is a perspective view of the bag 30 after the food item 12 has been placed therein. In the illustrated embodiment, the bag 30 is formed of a clear or transparent material such that the food item 12 is visible within the bag 30. Alternatively, the bag 30 can be formed of a different material such that the food item 12 is not visible within the bag 30. Referring to Figures 2A and 2B together, the indicia 236 can comprise a regular (e.g., a repeated, tiled pattern) such as a grid of intersecting, generally linear lines or segments 237. In the illustrated embodiment, the indicia 236 is positioned on the first surface 233 of the bag 30 such that it generally overlays or is superimposed over the food item 12. In other embodiments, the indicia 236 can comprise another regular pattern and can extend over more or less of the first surface 233 of the bag 30. For example, the pattern 236 could extend to the sides of the bag 30 and thus cover the entire first surface 233. As such, bags 30 could be created from a large roll of printed plastic or other flexible sheet/planar material, with one side of the material printed with the indicia and individual bags or portions of bags cut therefrom.

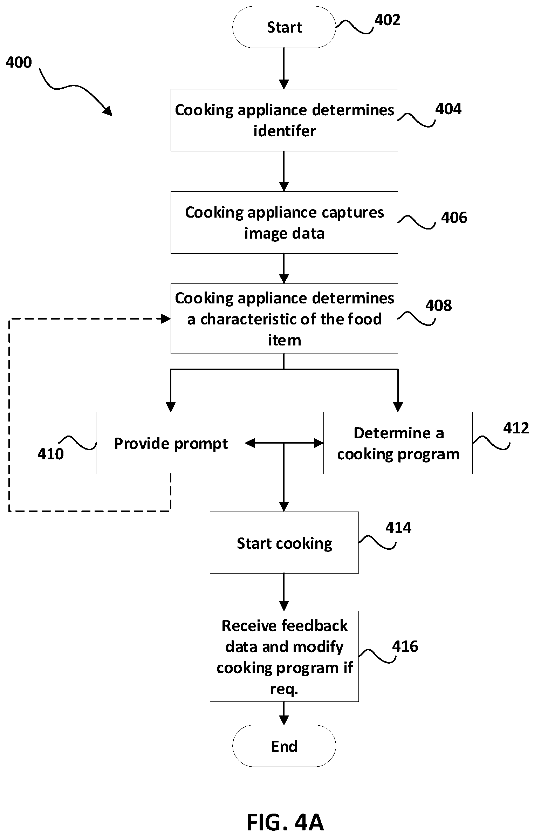

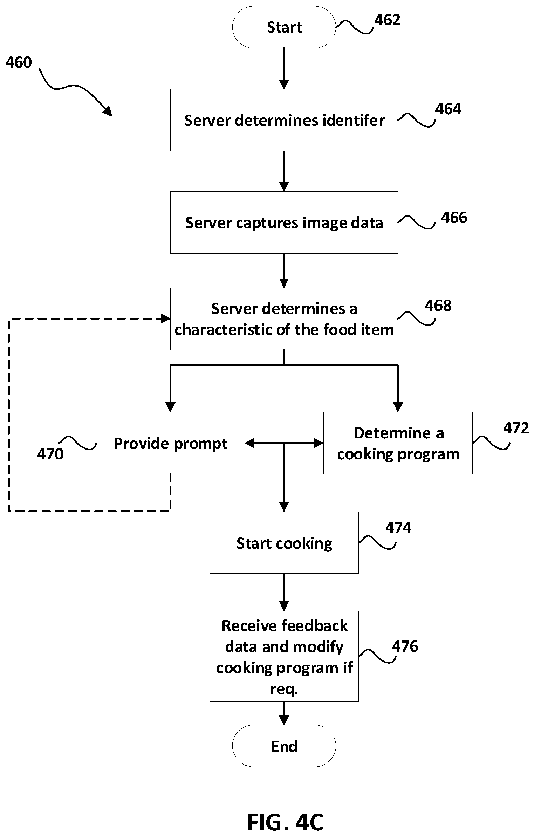

Positioning the food item 12 in the bag 30 causes the first surface 233 of the bag 30 to be generally non-planar-which distorts the indicia 236 from the planar grid illustrated in Figure 2A. Optionally, the user can place the bag 30 in a vacuum device to remove air from the bag 30, or could manually remove some air from the bag 30 before sealing it. As described in greater detail below with reference to Figure 4, the distortion of the indicia 236 can provide information about characteristics of the food item 12 such as, for example, a thickness, volume, shape, or mass of the food item 12. Likewise, if the bag 30 is substantially translucent, the color, size, position, shape, etc., of the food item 12 in the bag 30 can provide information about the characteristics of the food item 12 in addition to or alternatively to any distortion of the indicia 236. For example, a position of the food item 12 relative to the indicia 236 - even if the bag 30 is not pulled tight around the food item 12 - can provide information about the size (e.g., shape, volume, thickness, etc.) or weight of the food item 12. Even when the bag 30 is opaque and is not pulled tight around the food item 12, distortion of the indicia 236 from the food item 12 can provide information that permits accurate estimation of the thickness and/or shape of the food item 12.

In some embodiments the bag 30 can also include further indicia (not pictured) on a second surface 235 (Figure 2B) that is opposite to the first surface 233. The indicia on the first and second surfaces 233, 235 of the bag can have different colors such that they are distinguishable in an image taken of the bag 30. The indicia 236 on the first surface 233 and/or the indicia on the second surface 235 can be used/imaged to provide information about the food item 12.

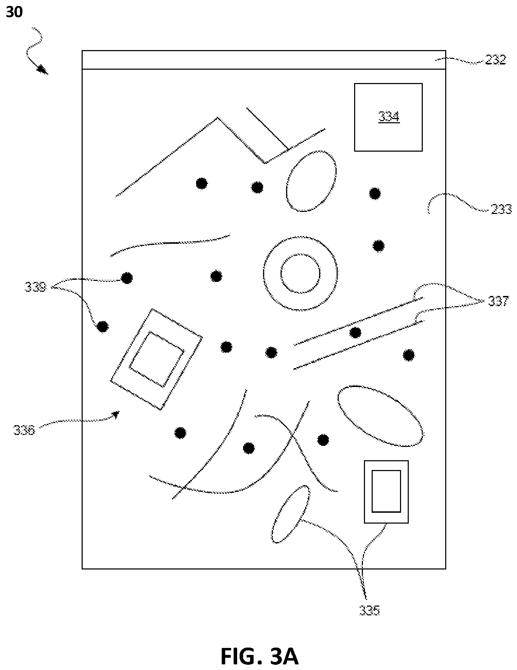

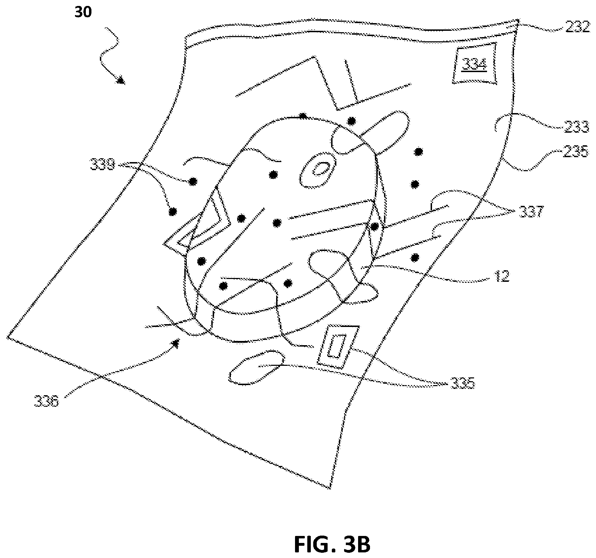

Alternatively, the bag 30 can include indicia having other shapes, arrangements, etc. For example, Figure 3A is a top view of the bag 30, and Figure 3B is a perspective view of the bag 30 after the food item 12 has been placed therein in accordance with another embodiment of the present technology. Referring to Figures 3A and 3B together, an identifier 334 and indicia 336 are printed on or otherwise affixed to the first surface 233 of the bag 30. In the illustrated embodiment, the indicia 336 is an irregular pattern (e.g., a pattern that cannot be formed with simple tiling) that comprises an irregular arrangement of shapes 335, lines 337, and dots 339 positioned on the first surface 233. In some embodiments, two or more of the shapes 335, lines 337, and/or dots 339 can fully or partially overlap one another. At least a portion of the indicia 336 is positioned on the first surface 233 of the bag 30 such that it overlays and is therefore distorted when the food item 12 is positioned in the bag 30. The indicia 336 can be unique to the bag 30, and the identifier 334 can include information about the specific, unique indicia 336. That is, for example, no other sous vide bags (or a very small number of sous vide bags) can be manufactured to have the same indicia 336.

In some embodiments, however, irregular or asymmetric patterns can reduce the computational burden by making it easier to determine an orientation of the bag 30. Likewise, irregular patterns can reduce the "null space" or ambiguity between multiple algorithmic solutions to determining the location of the indicia in 3D space.

In general, sous vide bags in accordance with the present technology can have any arrangement, combination, orientation, etc., of shapes, lines, dots, etc. The indicia can be repetitive or non-repetitive. Moreover, indicia can be provided on one or multiple surfaces of a sous vide bag, and the indicia on each surface can be the same or different. The indicia can be printed or affixed on a sous vide bag, or can be light indicia that are projected onto the bags and subsequently imaged.

The present technology enables the automatic estimation/determination of one or more characteristics of a food item 12, such as a food item 12 that is disposed within a sous vide bag having indicia printed, affixed, or otherwise disposed thereon. In particular, a user can capture one or more images of the food item 12 in the bag and a computer-vision or other algorithm can be used to estimate the thickness, weight, shape, etc., of the food item 12 based at least in part on image data 104 corresponding to the indicia on the bag. The determined characteristics can be used to determine or set one or more cooking parameters for cooking the food item 12 (e.g., a water bath temperature, cooking time, start time, etc.), or to trigger a notification or other prompt for the user.

Referring to Figure 4A there is shown a flow diagram of a process or method 400 of estimating a characteristic of a food item 12 using the cooking appliance 110a discussed in relation to Figure 1B.

The method 400 starts at block 402. For example, the method 400 can start when a user activates an 'on' button of the cooking appliance 110a.

At step 404, the method 400 optionally includes determining an identifier of the bag 30. As will be described in later examples, this step is optional as at least some of the indicia captured in the image data 104 can be an identifier of the bag 30, thus removing this step of scanning a machine-readable code 234, 334 of the bag 30. In one form, the camera 115 of the cooking appliance 110a can be operated to capture the machine-readable code 234, 334 indicative of the bag identifier. For example, the machine-readable code 234, 334 can be a scannable QR code or barcode. After scanning the identifier, the system 100 can output cooking instructions, cooking recommendations, or other information via the output device of the cooking appliance 110a. Furthermore, the processor 112 can have stored in memory 113 a plurality of identifiers and associated data which can be retrieved and used. For example, each identifier stored in memory 113 may have associated therewith a visual representation of the indicia on the bag, wherein the processor 112 use the identifier to determine or identify the associated specific indicia (e.g., the indicia 236, the indicia 336, or a different indicia) that is printed on the bag 30 based on the scanned identifier. That is, reading the identifier on the bag 30 can provide the processor 112 with information about the (planar) arrangement of the indicia on the bag 30. Alternatively, a user can take an image of the bag 30 while it lies flat, before placing any food within the bag.

At step 406, the method 400 includes the processor 112 of the cooking appliance 110a receiving image data 104 related to the food item 12. The image data 104 is received by the processor 112 from the camera 115 of the cooking appliance 110a. The image data 104 may be provided in the form of video data which includes a plurality of images of the food item 12 in the bag 30. Alternatively, the image data 104 may include one or more still images. The images can be taken using camera 115 at any orientation and distance relative to the bag 30 so long as the food item 12 and at least some of the indicia on the bag 30 are visible.

The processor 112 of the cooking appliance 110a can additionally receive data related to the food item 12 directly from user input via the input device of the cooking appliance 110a. For example, the user may enter via the input device of the cooking appliance 110a the type of food item 12 to be cooked (e.g., a steak), or any known characteristics of the food item 12 (e.g., weight, tenderness, size, etc.). The cooking appliance 110a allows users to input easily-knowable characteristics of the food item 12 (e.g., type), while allowing the user to take images of the food item 12 with the camera 115 of the cooking appliance 110a for automatic determination of more complex or difficult to measure characteristics (e.g., thickness, weight, shape, etc.). In some embodiments, the processor 112 of the cooking appliance 110a can also receive image data 104 of the food item 12 and the bag 30 (e.g., in the same frame) when the food item 12 is not yet placed in the bag 30. Using the planar bag 30 as a reference, such image data 104 can also be used to estimate characteristics of the food item 12.

At step 408, the method 400 includes determining at least one characteristic of the food item 12. For example, the processor 112 of the appliance 110a can execute an estimation module 744 stored in memory 113a (see Figure 8A) which employs one or more computer-vision or augmented-reality algorithms stored in memory 113a to process the image data 104 to determine a location/orientation of the indicia on the bag 30 in three-dimensional (3D) space. The processor of the cooking appliance 110a can employ algorithms as described in, for example, *"*Image Restoration of Arbitrarily Warped Documents," Brown, Michael S, and W. Brent Seales, IEEE Transactions on Pattern Analysis and Machine Intelligence, vol. 26, no. 10, Oct. 2004, pp. 1295-306, and/or *"*A New Approach to Image-Based Estimation of Food Volume," Hassannejad et. al., Algorithms, vol. 10, no. 2, 10 June 2017.) That is, the processor 112 of the appliance 110a can estimate/model the 3D shape of the bag 30 based on the distortion of a known indicia on the bag 30. For example, the processor 510 of the user device 500a takes known data stored in memory (such as a prior image of the indicia, or a known geometry of the indicia), and compares it with a newly received image of that indicia as distorted by the food item 12 that lies underneath and within the bag 30. That known data can be locally stored in memory 113 of the appliance 110a. It will be appreciated by those skilled in the art that other computer vision algorithms can be used. In one form, augmented reality toolkits for the Android^{™} operating system (ARCore) and Apple^{™} iOS (ARKit) can be utilised for implementing the computer vision algorithm. Deep neural networks can also be used to determine the type of food item 12 (e.g. loin steak vs lamp chop).

The location or distortion of the indicia in 3D space and/or image data 104 relating to the color or texture of the food item 12 (e.g., when the bag 30 is translucent) can then be used to estimate physical characteristics of the food item 12 such as the thickness, weight, and shape. For example, the processor 112 of cooking appliance 110a can estimate the shape and thickness of the food item 12 based on the determined 3D geometry of the indicia on the bag 30, and/or can estimate the type of the food item 12 based on its color and/or texture. For example, the computer vision algorithm executed by the processor 112 can determine a fat-to-lean category of a meat food item 12 and/or a grade of the meat food item 12 which can impact the cooking program (e.g. well-marbled beef may require less cooking time that less-marbled beef). Similarly, the processor 112 can further estimate the weight of the food item 12 based on previously received information, such as one or more user input food characteristics, about what the food item 12 is (e.g., via a user input indicating that the food item 12 is a steak) and reference to a stored lookup table or database stored in memory 113 including an average density for the type of food item 12. In certain embodiments, the processor 112 of the cooking appliance 110a can process the image data 104 to determine a quantity of food items 12 disposed within the bag 30 (e.g., that two steaks are positioned side-by-side in the bag 30) and/or an overlap or relative positioning of multiple food items 12 that are positioned within the bag 30. The processor 112 can identify the type of food item 12 based on the determined characteristics (e.g., shape) of the food item 12.

The processor 112 of the cooking appliance 110a can further process the image data 104 to (i) distinguish between the food item 12 and a sauce, fluid, or other ingredient in the bag 30, and/or (ii) to determine that one or more air bubbles exist in the bag 30. For example, the processor 112 can process color in the image data 104 to distinguish between the food item 12 and a sauce in the bag 30 while analyzing the 3D geometry of the indicia (e.g., local maxima) to identify air bubbles in the bag 30. Based on the determined sauce distribution and/or the existence of air bubbles, the processor 112 of the cooking appliance 110a can further estimate a surface heat transfer coefficient for the food item 12.

After determining the one or more characteristics of the food item 12, at step 410 the method 400 includes the processor 112 controlling the output device to provide a notification or prompt to the user and/or determine a cooking program for the food item 12 at step 412.

At step 410, for example, the processor 112 can control the output device to present a prompt to the user to reposition the food item 12 if it is determined that there are excessive air bubbles in the bag 30, a sauce and/or ingredient is distributed in such a manner to inhibit or slow cooking of the food item 12. More specifically, the processor 112 of the cooking appliance 110a can provide a prompt to the user via the output device if an estimated surface heat transfer coefficient is below a threshold value. The processor 112 can control the output device to provide a prompt if it determines that multiple food items 12 are disposed within the bag 30 and overlapping in such a manner as to inhibit or slow cooking of the food item 12.

The method 400 can return to step 408 wherein the processor 112 receives additional image data 104 (e.g., via an additional image capture) after the food item 12 is repositioned within the bag 30. The prompt can be any suitable audible, tactile, visual, or other notification output by the output device of the cooking appliance 110a.

At step 412, the determined characteristics of the food item 12 can be used to determine a cooking program for the food item 12. For example, the determined thickness, weight, and/or shape of the food item 12 can be used by a cooking program determination module 746 (see Figure 8A) stored in memory 113a and executed by the processor 112 to determine or predict a cook time for the food item 12, an optimal temperature of the fluid 10, and/or another aspect of the sous vide cooking process. The determined characteristic can be input into a method for predictive cooking as described in detail in U.S. Patent Application No. 16/116,460, filed August 29, 2018, and titled "PREDICTIVE COOKING, SUCH AS FOR USE WITH SOUS VIDE COOKING SYSTEMS".

At step 414, the method includes operating the cooking appliance 110a to start cooking the food item 12. In some embodiments, after determining the cooking program, the cooking appliance 110a can begin the cooking program-for example, to begin heating the fluid 10 to a determined set point temperature.

At step 416, the method includes the processor 112 receiving feedback data from one or more sensors of the cooking appliance 110a and optionally modifying the cooking program based on the feedback data. For example, the cooking appliance 110a may have a thermometer to sense the temperature of the water. In the event the temperature of the water is too high, the cooking program determination module being executed by the processor 112 of the cooking appliance 110a can modify the cooking program in memory 113a accordingly to adjust the temperature of the water.

If the indicia is unique to the bag 30, the cooking appliance 110a can ensure that the bag 30 is not reused again by preventing the processing of image data 104 - or even operation of the cooking appliance 110a - upon receiving image data 104 of the bag 30 (and the unique indicia thereon) again at a later time. Inhibiting users from reusing a bag can improve food safety, provide for higher-quality cooking, etc. In particular, after beginning the cooking process using the identified bag 30, the processor 112 can store, in memory 113, a status in bag instance data 748 associated with the identifier, wherein the status is indicative of a used status for the bag. When subsequent image data 104 is received, the status associated with the bag identifier is checked in memory 113. If the status of the bag instance data indicates that the bag has been previously used, the processor 112 is configured to inhibit or prevent the image processing to determine a characteristic of the food item 12 and/or the cooking of the food item 12 in the reused bag by preventing the operation of the cooking components of the cooking appliance 110a.

Referring to Figure 4B there is shown a flow diagram of a process or method 430 of estimating a characteristic of a food item 12 using the cooking system 100a discussed in relation to Figure 1E.

The method 430 starts at block 432. For example, the method 400 can start when a user activates an application on the user device 500a.

At step 434, the method 430 optionally includes determining an identifier of the bag 30. Similarly to method 400, this step is optional as at least some of the indicia captured in the image data 104 can be an identifier of the bag 30, thus removing this step of scanning a machine readable code 234, 334 of the bag 30. In one form, the camera 540 of the user device 500a can be operated to capture the machine-readable code 234, 334 indicative of the bag identifier. For example, the machine-readable code 234, 334 can be a scannable QR code or barcode. After scanning the identifier, the user device 500a can output cooking instructions, cooking recommendations, or other information via the output device of the user device 500a. Furthermore, the user device 500a can have stored in memory a plurality of identifiers and associated data which can be retrieved and used. For example, each identifier stored in memory 113 may have associated therewith a visual representation of the indicia on the bag, wherein the processor 510 of the user device 500a use the identifier to determine or identify the associated specific indicia (e.g., the indicia 236, the indicia 336, or a different indicia) that is printed on the bag 30 based on the scanned identifier. That is, reading the identifier on the bag 30 can provide the processor 510 of the user device 500a with information about the (planar) arrangement of the indicia on the bag 30. Alternatively, a user can take an image of the bag 30 using the camera 540 of the user device 500a while it lies flat, before placing any food within the bag.

At step 436, the method 430 includes the processor 510 of the user device 500a receiving image data 104 related to the food item 12. The image data 104 is received by the processor 510 of the user device 500a from the camera 540 of the cooking appliance 110b. The image data 104 may be provided in the form of video data which includes a plurality of images of the food item 12 in the bag 30. Alternatively, the image data 104 may include one or more still images. The images can be taken using camera 115 at any orientation and distance relative to the bag 30 so long as the food item 12 and at least some of the indicia on the bag 30 are visible.

The processor 510 of the user device 500a can additionally receive data related to the food item 12 directly from user input via the input device of the user device 500a. For example, the user may enter via the input device of the user device 500a the type of food item 12 to be cooked (e.g., a steak), or any known characteristics of the food item 12 (e.g., weight, tenderness, size, etc.). The user device 500a allows users to input easily-knowable characteristics of the food item 12 (e.g., type), while allowing the user to take images of the food item 12 with the camera 540 of the user device 500a for automatic determination of more complex or difficult to measure characteristics (e.g., thickness, weight, shape, etc.). In some embodiments, the processor 510 of the user device 500a can also receive image data 104 of the food item 12 and the bag 30 (e.g., in the same frame) when the food item 12 is not yet placed in the bag 30. Using the planar bag 30 as a reference, such image data 104 can also be used to estimate characteristics of the food item 12.

At step 438, the method 430 includes determining at least one characteristic of the food item 12. For example, the processor 510 of the user device 500a can execute an estimation module 744 (see Figure 5) stored in program memory 560 which employs one or more computer-vision or augmented-reality algorithms stored in memory 550 of the user device 500a to process the image data 104 to determine a location/orientation of the indicia on the bag 30 in three-dimensional (3D) space. The processor 510 of the user device 500a can employ algorithms as described in the earlier example. That is, the processor 510 of the user device 500a can estimate/model the 3D shape of the bag 30 based on the distortion of a known indicia on the bag 30. For example, the processor 510 of the user device 500a takes known data (such as a prior image of the indicia, or a known geometry of the indicia), and compares it with a newly received image of that indicia as distorted by the food item 12 that lies underneath and within the bag 30. That known data can be locally stored in memory 113 of the user device 500a which can be downloaded from a remote server such as server processing system 140.

The location or distortion of the indicia in 3D space and/or image data 104 relating to the color or texture of the food item 12 (e.g., when the bag 30 is translucent) can then be used to estimate physical characteristics of the food item 12 such as the thickness, weight, and shape. For example, the processor 510 of the user device 500a can estimate the shape and thickness of the food item 12 based on the determined 3D geometry of the indicia on the bag 30, and/or can estimate the type of the food item 12 based on its color and/or texture. For example, the computer vision algorithm executed by the processor 112 can determine a fat-to-lean category of a meat food item 12 and/or a grade of the meat food item 12 which can impact the cooking program (e.g. well-marbled beef may require less cooking time that less-marbled beef). Similarly, the processor 510 of the user device 500a can further estimate the weight of the food item 12 based on previously received information, such as one or more user input food characteristics, about what the food item is (e.g., via a user input indicating that the food item 12 is a steak) and reference to a stored lookup table or database stored in memory of the user device 500a including an average density for the type of food item 12. In certain embodiments, the processor 510 of the user device 500a can process the image data 104 to determine a quantity of food items 12 disposed within the bag 30 (e.g., that two steaks are positioned side-by-side in the bag 30) and/or an overlap or relative positioning of multiple food items 12 that are positioned within the bag 30. The processor 510 of the user device 500a can identify the type of food item 12 based on the determined characteristics (e.g., shape) of the food item 12.

The processor 510 of the user device 500a can further process the image data 104 to (i) distinguish between the food item 12 and a sauce, fluid, or other ingredient in the bag 30, and/or (ii) to determine that one or more air bubbles exist in the bag 30. For example, the processor 510 of the user device 500a can process color in the image data 104 to distinguish between the food item 12 and a sauce in the bag 30 while analyzing the 3D geometry of the indicia (e.g., local maxima) to identify air bubbles in the bag 30. Based on the determined sauce/ingredient distribution and/or the existence of air bubbles, the processor 112 of the user device 500a can further estimate a surface heat transfer coefficient for the food item 12.

After determining the one or more characteristics of the food item 12, at step 440 the method 430 includes the processor 510 of the user device 500a controlling the output device to provide a notification or prompt to the user and/or determine a cooking program for the food item 12 at step 442.

At step 440, for example, the processor 510 of the user device 500a can control the output device to present a prompt to the user to reposition the food item 12 if it is determined that there are excessive air bubbles in the bag 30 and/or if a sauce/ingredient is distributed in such a manner to inhibit or slow cooking of the food item 12. More specifically, the processor 510 of the user device 500a can provide a prompt to the user via the output device if an estimated surface heat transfer coefficient is below a threshold value. The processor 510 of the user device 500a can control the output device to provide a prompt if it determines that multiple food items 12 are disposed within the bag 30 and overlapping in such a manner as to inhibit or slow cooking of the food item 12.

The method 400 can return to step 436 wherein the processor 510 of the user device 500a receives additional image data 104 (e.g., via an additional image capture) after the food item 12 is repositioned within the bag 30. The prompt can be any suitable audible, tactile, visual, or other notification output by the output device of the cooking appliance 110b.

At step 442, the determined characteristics of the food item 12 can be used by the processor 510 of the user device 500a to determine a cooking program for the food item 12 by executing cooking program determination module 746 (see Figure 5) stored in program memory 560. For example, the determined thickness, weight, and/or shape of the food item 12 can be used to determine or predict a cook time for the food item 12, an optimal temperature of the fluid 10, and/or another aspect of the sous vide cooking process. The determined characteristic can be input into a method for predictive cooking as described in detail in U.S. Patent Application No. 16/116,460, filed August 29, 2018, and titled "PREDICTIVE COOKING, SUCH AS FOR USE WITH SOUS VIDE COOKING SYSTEMS".

At step 444, the method includes the user device 500a facilitating the start of cooking by the cooking appliance 110b. In some embodiments, after determining the cooking program, the user device 500a can send instructions to the cooking appliance 110b to begin the cooking program-for example, to begin heating the fluid 10 to a determined set point temperature.

At step 446, the method 400 includes the processor 510 of the user device 500a receiving feedback data from one or more sensors of the cooking appliance 110b and optionally modifying the cooking program based on the feedback data. For example, the cooking appliance 110b may have a thermometer to sense the temperature of the water. In the event the temperature of the water is too high, the processor 510 of the user device 500a can modify the cooking program in memory accordingly to adjust the temperature of the water.

As discussed in the earlier example, if the indicia is unique to the bag 30, the user device 500a or the cooking appliance 110b can ensure that the bag 30 is not reused again by preventing the processing of image data 104 - or even operation of the cooking appliance 110b - upon receiving image data 104 of the bag 30 (and the unique indicia thereon) again at a later time. Inhibiting users from reusing a bag can improve food safety, provide for higher-quality cooking, etc. In particular, after beginning the cooking process using the identified bag 30, the processor 510 of the user device 500a or the processor 112 of the cooking appliance 110b can store, in memory, a status in bag instance data 748 associated with the identifier and indicative of a used status for the bag. When subsequent image data 104 is received, the status associated with the bag identifier is checked in memory of the user device 500a or cooking appliance 110b. If the status indicates that the bag has been previously used, the processor 510 of the user device 500a is configured to inhibit or prevent the image processing to determine a characteristic of the food item 12 and/or instruct the cooking appliance 110b to prevent or inhibit the cooking of the food item 12 in the reused bag by preventing the operation of the cooking components of the cooking appliance 110b.

Referring to Figure 4C there is shown a flow diagram of a process or method 460 performed by the cooking system 100b of Figures 1F and 1G for automatically determining one or more characteristics of a food item 12 in accordance with an embodiment of the present technology.

The method 460 starts at block 462. For example, the method 460 can start when a user activates a specific application on the user device 500b.

At step 464, the method 460 optionally includes reading an identifier associated with the bag 30 (e.g., the identifier 234 or 334). For example, the identifier can be a scannable QR code or barcode. After scanning the identifier, the user device 500b can provide via the output device cooking instructions, cooking recommendations, or other information and the user device 500b or server processing system 140 can determine or identify the specific indicia (e.g., the indicia 236, 336, or a different indicia) that is printed on the bag 30 based on the scanned identifier. That is, reading the identifier on the bag 30 can provide the user device 500b or server processing system 140 with information about the (planar) arrangement of the indicia on the specific bag 30 being used by the user. For example, the information can be obtained from an application running on the user device 500b, or can download it from the server processing system 140. Alternatively, a user can take an image of the bag 30 while it lies flat, before placing any food within the bag.

At step 466, the method 460 includes the server processing system 140 receiving image data 104 related to the food item 12 from the user device 500b or cooking appliance 110b. For example, a camera of the user device 500b or the cooking appliance 110a can capture image data 104 indicative of one or more images and/or video (i.e. a series of images) of the food item 12 in the bag 30. The images can be taken at any orientation and distance relative to the bag 30 so long as the food item 12 and at least a part of the indicia on the bag 30 are visible. In some embodiments, after reading the identifier on the bag 30, the server processing system 140 can provide instructions to the user device 500b for capturing the images of the food item 12. Such instructions can include audio, visual, tactile, and/or other cues that can be presented to the user via one or more output devices of the user device 500b for guiding the user to capture suitable image data 104 (e.g., to position the camera at a particular location and/or orientation relative to the bag 30 and the food item 12).

The server processing system 140 can additionally receive data related to the food item 12 directly from user input via the user device 500b or cooking appliance 110b. For example, the user may enter the type of food item 12 to be cooked (e.g., a steak), or any known characteristics of the food item 12 (e.g., weight, tenderness, size, etc.). The system 100b allows users to input easily-knowable characteristics of the food item 12 (e.g., type) via the input device of the user device 500b, while allowing the user to take images of the food item 12 for automatic determination of more complex or difficult to measure characteristics (e.g., thickness, weight, shape, etc.). In some embodiments, the system 100 can also receive image data 104 of the food item 12 and the bag 30 (e.g., in the same frame) when the food item 12 is not yet placed in the bag 30. Using the planar bag 30 as a reference, such image data 104 can also be used to estimate characteristics of the food item 12.

At step 468, the method 460 includes the server processing system 140 determining at least one characteristic of the food item 12. For example, the processor 142 of the server processing system 140 can execute an estimation module 744 (see Figure 8B) stored in memory 144 which employs one or more computer-vision or augmented-reality algorithms to process the image data 104 received from the user device 500b to determine a location/orientation of the indicia on the bag 30 in three-dimensional (3D) space. The server processing system 140 can store in memory 144 and employ algorithms as described in earlier examples. That is, the processor 142 of the server processing system 140 can estimate/model the 3D shape of the bag 30 based on the distortion of a known indicia on the bag 30. For example, the system 100 takes known data stored in memory 144 (such as a prior image of the indicia, or a known geometry of the indicia), and compares it with a newly received image of that indicia as distorted by the food item 12 that lies underneath and within the bag 30. That known data can be locally stored in the memory 144 of the server processing system 140 and/or obtained locally from an earlier image taken of the indicia on the bag 30 and received from the user device 500b.

The location or distortion of the indicia in 3D space and/or image data 104 relating to the color or texture of the food item 12 (e.g., when the bag 30 is translucent) can then be used by the processor 142 of the server processing system 140 to estimate physical characteristics of the food item 12 such as the thickness, weight, and shape. For example, the processor 142 of the server processing system 140 can estimate the shape and thickness of the food item 12 based on the determined 3D geometry of the indicia on the bag 30, and/or can estimate the type of the food item 12 based on its color and/or texture. For example, the computer vision algorithm executed by the processor 112 can determine a fat-to-lean category of a meat food item 12 and/or a grade of the meat food item 12 which can impact the cooking program (e.g. well-marbled beef may require less cooking time that less-marbled beef). Similarly, the processor 142 of the server processing system 140 can further estimate the weight of the food item 12 based on previously received information, such as one or more user input food characteristics, about what the food item 12 is (e.g., via a user input indicating that the food item 12 is a steak) and reference to a stored lookup table or database stored in memory 144 including an average density for the type of food item 12. In certain embodiments, the processor 142 of the sever processing system 140 can process the image data 104 to determine a quantity of food items 12 disposed within the bag 30 (e.g., that two steaks are positioned side-by-side in the bag 30) and/or an overlap or relative positioning of multiple food items 12 that are positioned within the bag 30. The processor 142 of the server processing system 140 can identify the type of food item 12 based on the determined characteristics (e.g., shape) of the food item 12.

The processor 142 of the server processing system 140 can further process the image data 104 to (i) distinguish between the food item 12 and a sauce, fluid, or other ingredient in the bag 30, and/or (ii) to determine that one or more air bubbles exist in the bag 30. For example, the system 100 can process color in the image data 104 to distinguish between the food item 12 and a sauce in the bag 30 while analyzing the 3D geometry of the indicia (e.g., local maxima) to identify air bubbles in the bag 30. Based on the determined sauce and/or ingredient distribution and/or the existence of air bubbles, the processor 142 of the server processing system 140 can further estimate a surface heat transfer coefficient for the food item 12.

If the indicia is unique to the bag 30, the server processing system 140 can ensure that the bag 30 is not reused again by preventing the processing of image data 104 - or even operation of the cooking appliance 110b - upon receiving image data 104 of the bag 30 (and the unique indicia thereon) again at a later time. Inhibiting users from reusing a bag can improve food safety, provide for higher-quality cooking, etc. In particular, after beginning the cooking process using the identified bag 30, the server processing system 140 can store, in memory 144, a status in bag instance data 748 associated with the identifier and indicative of a used status for the bag 30. When subsequent image data 104 is received, the status associated with the bag identifier is checked in memory 144 of the server processing system 140. If the status indicates that the bag has been previously used, the processor 142 of the server processing system 140 is configured to inhibit or prevent the image processing to determine a characteristic of the food item 12 and/or instruct the cooking appliance 110b to prevent or inhibit the cooking of the food item 12 in the reused bag 30 by preventing the operation of the cooking components of the cooking appliance 110b.

After determining the one or more characteristics of the food item 12, at step 470 the processor 142 of the server processing system 140 can send a notification or prompt to the user device 500b and/or determine a cooking program for the food item 12 at step 472.

At step 470, for example, the server processing system 140 can send a prompt to the user device 500b to reposition the food item 12 if it is determined that there are excessive air bubbles in the bag 30, and/or a sauce and/or ingredient is distributed in such a manner to inhibit or slow cooking of the food item 12. More specifically, the server processing system 140 can send a prompt to the user device 500b if an estimated surface heat transfer coefficient is below a threshold value. The server processing system 140 can send a prompt if it determines that multiple food items 12 are disposed within the bag 30 and overlapping in such a manner as to inhibit or slow cooking of the food item 12. The method 460 can return to block 466 and receive additional image data 104 (e.g., via an additional image capture) after the food item 12 is repositioned within the bag 30. The prompt can be any suitable audible, tactile, visual, or other notification output by the user device 500b.

At block 472, the determined characteristics of the food item 12 can be used by the processor 142 of the server processing system 140 executing a cooking program determination module 746 (see Figure 8B) to determine a cooking program for the food item 12. For example, the determined thickness, weight, and/or shape of the food item 12 can be used by the processor 142 to determine or predict a cook time for the food item 12, an optimal temperature of the fluid 10, and/or another aspect of the sous vide cooking process. The determined characteristic can be input into a method for predictive cooking as described in detail in U.S. Patent Application No. 16/116,460, filed August 29, 2018, and titled "PREDICTIVE COOKING, SUCH AS FOR USE WITH SOUS VIDE COOKING SYSTEMS".

At step 474, the method includes the server processing system 140 facilitating the start of the cooking process by the cooking appliance 110b. In some embodiments, after determining the cooking program, the server processing system 140 can send instructions to the cooking appliance 110b to begin the cooking program-for example, to begin heating the fluid 10 to a determined set point temperature. These instructions may be sent via user device 500b.

At step 476, the method 460 includes the server processing system 140 receiving feedback data from one or more sensors of the cooking appliance 110b and optionally modifying the cooking program based on the feedback data. For example, the cooking appliance 110b may have a thermometer to sense the temperature of the water. In the event the temperature of the water is too high compared to the desired set temperature of the cooking program, the processor 142 of the server processing system 140 can modify the cooking program and transfer data indicative of the cooking program as adjusted to the cooking appliance 110b to adjust the temperature of the water. The feedback data may be received by the server processing system 140 via the user device 500b. The data indicative of the cooking program as modified can be received by the cooking appliance 110b via the user device 500b.

In one variation, image data 104 may be captured by a camera of the cooking appliance 110 or the user device 500 during the cooking process to determine an amount of liquid that left the food item 12. The computer vision algorithm can be executed by the respective processor of the server processing system 140, user device 500 or cooking appliance 110 to compensate for refraction of the indicia of the bag 30 under water in order to determine the amount of liquid that has left the food item 12 during the cooking process. The respective processor can modify the cooking program if required based on the determination and/or a prompt can be provided to the user via the user device 500 or cooking appliance 110 to indicate that the food item 12 has been cooked or provide a revised cooking estimation time.

Therefore, the present technology can improve a sous vide cooking process by automatically determining one or more characteristics of a food product to be cooked that can be used to refine or improve a sous vide cooking process. Notably, the present technology can be used to estimate characteristics (e.g., shape, thickness, etc.) that may be difficult for a user to determine accurately on their own. Instead of omitting such information or spending additional time to generate/determine the information, the present technology advantageously allows the user to capture and input such information simply by taking a picture of the food item after it is disposed within a sous vide bag.

Alternatively, the present technology can be implemented to determine a characteristic of a food item 12 at a time or place other than before a sous vide cooking process. For example, the system 100 can receive image data 104 of a food item 12 disposed within a sous vide bag including indicia after or during a sous vide cooking process. The image data 104 can be processed as described above to, for example, determine an amount of water lost, or an amount of fluid absorbed by the food item 12 during the cooking process. Likewise, embodiments of the present technology can be implemented to determine characteristics of food items 12 at the point of packaging the items into bags (e.g., at a manufacturer of prepackaged foods, restaurants), and thus is not limited for use with sous vide cooking. In some embodiments, the indicia can be shined or projected onto the bags and the bags can then be imaged at a different angle. The determined characteristics can be used to, for example, confirm manufacturing consistency, provide information for labeling, etc. Accordingly, from the foregoing, it will be appreciated that while specific embodiments of the present technology have been described herein for purposes of illustration, various modifications may be made without deviating from the scope of the present technology.

In some embodiments, the indicia can be shined or projected onto the bags and the bags can then be imaged at a different angle. The determined characteristics can be used to, for example, confirm manufacturing consistency, provide information for labeling, etc. Accordingly, from the foregoing, it will be appreciated that while specific embodiments of the present technology have been described herein for purposes of illustration, various modifications may be made without deviating from the scope of the present technology.

In another embodiment, as shown in Figure 1B, the cooking appliance 110 may optionally include a projector 99 which projects light forming the indicia on the food item 12. In one form, the processor 112 of the sous vide device or thermal immersion circulator 110a may project light forming the indicia on the outer surface of the bag 30. The camera 115 may capture the image data 104 showing the indicia as projected onto the bag containing the food item 12. The processor 112 can perform the method 400 as earlier described to determine the one or more characteristics of the food item 12 contained in the bag 30.

In one form, the cooking appliance 110a may be provided in the form of an oven. The food item 12 may be placed in the oven, wherein the projector is controlled by the processor 112 to project a light representing the indicia onto the outer surface of the food item 12. The camera of the oven may captured the image data 104 showing the indicia projected onto the food item 12. The image data 104 can be processed, the one or more characteristics of the food item 12 and the cooking program can be determined in a similar manner to that described with reference to method 400.

Figures 5-7 and the following discussion provide a brief, general description of a suitable computing environment in which aspects of inventive systems and methods for estimating characteristics of a food item 12 can be implemented. The present technology can be embodied as special-purpose hardware (e.g., circuitry), as programmable circuitry appropriately programmed with software and/or firmware, or as a combination of special-purpose and programmable circuitry. Hence, embodiments of the present technology can include a machine-readable medium having stored thereon instructions which may be used to cause a computer, a microprocessor, processor, and/or microcontroller (or other electronic devices) to perform a process. The machine-readable medium may include, but is not limited to, optical disks, compact disc read-only memories (CD-ROMs), magnetooptical disks, ROMs, random access memories (RAMs), erasable programmable read-only memories (EPROMs), electrically erasable programmable read-only memories (EEPROMs), magnetic or optical cards, flash memory, or other type of media/machine-readable medium suitable for storing electronic instructions.

The present technology can also be practiced in distributed computing environments, where tasks or modules are performed by remote processing devices, which are linked through a communications network, such as a Local Area Network ("LAN"), Wide Area Network ("WAN"), or the Internet. In a distributed computing environment, program modules or sub-routines may be located in both local and remote memory storage devices. Aspects of the technology described above may be stored or distributed on computer-readable media or, alternatively, aspects of the invention may be distributed electronically over the Internet or over other networks (including wireless networks). Those skilled in the relevant art will recognize that portions of the invention may reside on a server computer, while corresponding portions reside on a client/user computer. Data structures and transmission of data particular to aspects of the invention are also encompassed within the scope of the invention.

Figure 5 is a block diagram of a user device 500 in accordance with an embodiment of the present technology, on which some implementations of the disclosed technology can operate. The user device 500 can be a smartphone, tablet, or personal computer. The user device 500 can include one or more input devices 520 that provide input to a processor (CPU) 510, notifying it of actions. The actions are typically mediated by a hardware controller that interprets the signals received from the input devices 520 and communicates the information to the processor 510 using a communication protocol. The input device 520 can include, for example, a mouse, a keyboard, a touchscreen, an infrared sensor, a touchpad, a wearable input device, a camera- or image-based input device, a microphone, and/or other user input devices.

The processor 510 can be a single processing unit or multiple processing units in a device or distributed across multiple devices. The processor 510 can be coupled to other hardware devices, for example, with the use of a bus, such as a PCI bus or SCSI bus. The processor 510 can communicate with a hardware controller for devices, such as for a display 530. The display 530 can be used to display text and graphics. In some examples, the display 530 provides graphical and textual visual feedback to a user. In some implementations, the display 530 includes the input device 520 as part of the display, such as when the input device 520 is a touchscreen or is equipped with an eye direction monitoring system. The display 530 can be separate from the input device 520. Examples of display devices include: an LCD display screen, an LED display screen, a projected, holographic, or augmented reality display (such as a heads-up display device or a head-mounted device), etc. Other I/O devices 540 can also be coupled to the processor, such as a network card, video card, audio card, USB, FireWire or other external device, camera, printer, speakers, CD-ROM drive, DVD drive, disk drive, or Blu-Ray device.

The user device 500 can also include a communication device (e.g., a wireless transceiver) capable of communicating wirelessly or wire-based with a network node. The communication device can communicate with another device or a server through a network using, for example, TCP/IP protocols. The user device 500 can utilize the communication device to distribute operations across multiple network devices.

The processor 510 can have access to a memory 550. The memory 550 can include one or more of various hardware devices for volatile and/or non-volatile storage, and can include both read-only and writable memory. For example, the memory 550 can comprise random access memory (RAM), CPU registers, read-only memory (ROM), and writable non-volatile memory, such as flash memory, hard drives, floppy disks, CDs, DVDs, magnetic storage devices, tape drives, device buffers, and so forth. The memory 550 is not a propagating signal divorced from underlying hardware and is thus non-transitory. The memory 550 can include a program memory 560 that stores programs and software, such as an operating system 562, a food item characteristic estimation module 744, and other application programs 566 (e.g., including a predictive cooking platform). The memory 550 can also include a data memory 570 that can store determinations or estimations of characteristics of food items 12, start times, completion times, user preferences such as tenderness of meat, etc., which can be provided to the program memory 560 or any element of the user device 500. In the illustrated embodiment, the memory 550 further includes an augmented-reality or computer-vision library 580 that can store, for example, computational algorithms, bag instance data indicative of indicia, and/or other resources that can be employed by the food item characteristic estimation module 744 to estimate one or more characteristics of a food item 12, as described in detail above.

Some embodiments of the present technology can be operational with numerous other general purpose or special purpose computing system environments or configurations. Examples of well-known computing systems, environments, and/or configurations that may be suitable for use with the technology include, but are not limited to, personal computers, server computers, handheld or laptop devices, cellular telephones, mobile phones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, and the like.

More specifically, Figure 6 is a block diagram of a distributed computing environment 600 in accordance with an embodiment of the present technology, in which some embodiments of the disclosed technology can operate. The environment 600 can include one or more user devices 605 (individually labeled as user devices 605A-605D), examples of which can include the user device 500 described in detail above with reference to Figure 5. The user devices 605 can operate in a networked environment using logical connections through a network 630 to one or more remote computers. In the illustrated embodiment, for example, the user devices 605 are communicatively coupled to a remote server computing device 610 via the network 630.

The server computing device 610 can be an edge server that receives client/user requests and coordinates fulfillment of those requests through other servers, such as server computing devices 620 (individually labeled as server computing devices 620A-620C). The server computing devices 610 and 620 can comprise computing systems, such as the user device 500. In the illustrated embodiment, each of the server computing devices 610 and 620 is displayed logically as a single server in Figure 6. Alternatively, some or all of the server computing devices 610 and 620 can be a distributed computing environment encompassing multiple computing devices located at the same or at geographically disparate physical locations. In some embodiments, each of the server computing devices 620 corresponds to a group of servers.

The user devices 605 and server computing devices 610 and 620 can each act as a server or client to other server/client devices. The server computing device 610 can connect to a database 615, and the server computing devices 620A-620C can each connect to a corresponding database 625A-625C, respectively. As discussed above, each of the server computing devices 620 can correspond to a group of servers, and each of these servers can share a database or can have their own database. The databases 615 and 625 can warehouse (e.g., store) information such as determined food item characteristics, start times, completion times, and user preferences. In some embodiments, one or more of the databases 615 and 625 can store an augmented-reality or computer-vision library that can include, for example, computational algorithms, indicia, and/or other resources that can be employed to estimate one or more characteristics of a food item. In the illustrated embodiment, the databases 615 and 625 are displayed logically as single units in Figure 6. Alternatively, the databases 615 and 625 can each be a distributed computing environment encompassing multiple computing devices, and can be located within their corresponding server or can be located at the same or at geographically disparate physical locations.

The network 630 can be a local area network (LAN) or a wide area network (WAN), but can also be other wired or wireless networks. The network 630 may be the Internet or some other public or private network. The user devices 605 can be connected to the network 630 through a network interface, such as by wired or wireless communication. While the connections between the server computing devices 610 and 620 are shown as separate connections, these connections can be any kind of local, wide area, wired, or wireless network, including the network 630 or a separate public or private network.

Figure 7 is a block diagram illustrating components 700 which, in some embodiments, can be used in a system employing the disclosed technology. The components 700 include hardware 702, general software 720, and specialized components 740. As discussed above, a system implementing the disclosed technology can use various hardware, including processing units 704 (e.g., CPUs, GPUs, APUs, etc.), working memory 706, storage memory 708, and input and output (I/O) devices 710. Referring to Figure 6, the components 700 can be implemented in one or more of the user devices 605 or on one or more of the server computing devices 610 and 620.

Referring again to Figure 7, the general software 720 can include various applications, including an operating system 722, local programs 724, and a basic input output system (BIOS) 726. The specialized components 740 can be subcomponents of a general software application 720, such as local programs 724. The specialized components 740 can include a food item characteristic estimation module 744, a cooking program determination module 746, and/or components that can be used for transferring data and controlling the specialized components 740, such as an interface 742. In some implementations, the components 700 can be in a computing system that is distributed across multiple computing devices or can be an interface to a server-based application executing one or more of the specialized components 740.

Those skilled in the art will appreciate that the components illustrated in Figures 5-7 described above, and in each of the flow diagrams discussed above, may be altered in a variety of ways. For example, the order of the logic may be rearranged, sub steps may be performed in parallel, illustrated logic may be omitted, other logic may be included, etc. In some implementations, one or more of the components described above can execute one or more of the processes described above.

In general, the detailed description of embodiments of the invention is not intended to be exhaustive or to limit the invention to the precise form disclosed above. While specific embodiments of, and examples for, the invention are described above for illustrative purposes, various equivalent modifications are possible within the scope of the invention, as those skilled in the relevant art will recognize. For example, while processes or blocks are presented in a given order, alternative embodiments may perform routines having steps, or employ systems having blocks, in a different order, and some processes or blocks may be deleted, moved, added, subdivided, combined, and/or modified. Each of these processes or blocks may be implemented in a variety of different ways. Also, while processes or blocks are at times shown as being performed in series, these processes or blocks may instead be performed in parallel, or may be performed at different times.

Aspects of the invention may be stored or distributed on computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the invention may be distributed over the Internet or over other networks (including wireless networks), on a propagated signal on a propagation medium (e.g., an electromagnetic wave(s), a sound wave, etc.) over a period of time, or they may be provided on any analog or digital network (packet switched, circuit switched, or other scheme). Those skilled in the relevant art will recognize that portions of the invention reside on a server computer, while corresponding portions reside on a client computer such as a mobile or portable device, and thus, while certain hardware platforms are described herein, aspects of the invention are equally applicable to nodes on a network.

These and other changes can be made to the invention in light of the above Detailed Description. While the above description details certain embodiments of the invention and describes the best mode contemplated, no matter how detailed the above appears in text, the invention can be practiced in many ways. Details of the invention may vary considerably in its implementation details, while still being encompassed by the invention disclosed herein. As noted above, particular terminology used when describing certain features or aspects of the invention should not be taken to imply that the terminology is being redefined herein to be restricted to any specific characteristics, features, or aspects of the invention with which that terminology is associated. In general, the terms used in the following claims should not be construed to limit the invention to the specific embodiments disclosed in the specification, unless the above Detailed Description section explicitly defines such terms. Accordingly, the actual scope of the invention is defined by the appended claims.

## Claims

1. A cooking appliance (110a) including:
one or more cooking components (116); and
a computing device for estimating one or more characteristics of a food item (12), comprising:
at least one processor (102); and
at least one non-transitory processor-readable medium (103) storing processor-executable instructions that, when executed by the at least one processor (102), cause the at least one processor (102) to:
receive image data (104) indicative of indicia printed or affixed on a sous vide bag (30)
containing a food item (12);
process the image data (104) to determine a location or distortion of the indicia in three-dimensional (3D) space; and
determine the one or more characteristics of the food item (12) based at least in part on the location or distortion of the indicia,
wherein the at least one processor (102) is configured to generate a cooking program based at least in part on the one or more characteristics of the food item (12), wherein the cooking program includes at least one of a cook time and a cooking temperature, and
wherein the at least one processor (102) is configured to control the one or more cooking components (116) according to the cooking program.

2. The cooking applicance (110a) of claim 1 wherein the at least one processor (102) is configured to process the image data (104) using a computer-vision algorithm.

3. The cooking appliance (110a) of claim 1 or 2 wherein the one or more characteristics of the food item (12) include at least one of a weight, a thickness, a volume, a shape, and a surface heat transfer coefficient of the food item (12), and wherein the at least one processor (102) is configured to receive one or more user input characteristics of the food item (12), wherein the at least one processor (102) is configured to determine the one or more characteristics of the food item (12) further based on the one or more user input characteristics of the food item (12).

4. The cooking appliance (110a) of claim 1, wherein the cooking appliance (110a) further includes one or more sensors to monitor the food item (12) during cooking, wherein the at least one processor (102) is configured to:
receive feedback data from the one or more sensors; and
modify the cooking program based at least in part on the feedback data;
wherein the one or more cooking components (116) are controlled by the at least one processor (102) according to the cooking program as modified.

5. The cooking appliance (110a) of claim 1 or 4, wherein the cooking appliance (110a) includes a camera (115) to capture the image data (104), and wherein the image data (104) captured by the camera (115) includes one or more images of the sous vide bag (30).

6. The cooking appliance (110a) of claim 5, wherein the at least one processor (102) of the computing device is configured to:
determine, using at least some of the image data (104) or a machine-readable code on the sous vide bag (30), a bag identifier identifying the sous vide bag (30); and
determine, using the bag identifier and indicia data stored in the memory (113a) of the computing device, a planar representation of the indicia;
wherein the at least one processor (102) of the computing device is configured to process the image data (104) using the planar representation of the indicia to determine the location or the distortion of the indicia in the 3D space.

7. The cooking appliance (110a) of claim 6, wherein the at least one processor (102) of the computing device is configured to:
record, in the memory (113a), a status associated with the bag (30) and indicative of the bag (30) having been used;
receive subsequent image data (104);
determine, based on subsequent image data (104) and the status, if the sous vide bag (30) has previously been used; and
in response to the bag (30) having been previously used, prevent the one or more cooking components (116) being controlled to cook the food item (12) in the sous vide bag (30).

8. A computer-implemented method for estimating one or more characteristics of a food item (12), comprising:
receiving image data (104) indicative of indicia printed or affixed on a sous vide bag (30) containing a food item (12);
processing the image data (104) to determine a location or distortion of the indicia in three-dimensional (3D) space; and
determining the one or more characteristics of the food item (12) based at least in part on the location or distortion of the indicia.

9. The method according to claim 8,
wherein processing the image data (104) includes use of a computer-vision algorithm.

10. The method of claim 8 or 9, wherein the method includes capturing the image data (104) using a camera (115) of the cooking appliance (110a) or a user device (500a) and wherein the image data (104) captured by the camera (115) includes one or more images of the sous vide bag (30).

11. The method of claim 10, wherein the method further includes:
determining, using at least some of the image data (104) or a machine-readable code on the sous vide bag (30), a bag identifier identifying the sous vide bag (30); and
determining, using the bag identifier and indicia data stored in memory (113a), a planar representation of the indicia;
wherein the processing of the image data (104) to determine a location or distortion of the indicia in three-dimensional (3D) space includes processing the image data (104) using the planar representation of the indicia to determine the location or the distortion of the indicia in the 3D space.

12. The method of claim 11, wherein the method further includes:
recording a status associated with the bag identifier, the status being indicative of the bag (30) having been used;
receiving subsequent image data (104);
determining, based on the bag identifier of the bag (30) captured in the subsequent image data (104) and the status, if the sous vide bag (30) has previously been used; and
in response to the bag (30) having been previously used, preventing the one or more cooking components being controlled to cook the food item (12) in the sous vide bag (30).

## Patentansprüche

1. Kochgerät (110a), das beinhaltet:
eine oder mehrere Kochkomponenten (116); und
eine Rechenvorrichtung zur Schätzung einer oder mehrerer Eigenschaften eines Nahrungsmittels (12), umfassend:
mindestens einen Prozessor (102); und
mindestens ein nichtflüchtiges, vom Prozessor lesbares Medium (103), das vom Prozessor ausführbare Anweisungen speichert, die, wenn sie von dem mindestens einen Prozessor (102) ausgeführt werden, den mindestens einen Prozessor (102) veranlassen:
Bilddaten (104) zu empfangen, die auf Angaben hinweisen, die auf einen Vakuumbeutel (30), das ein Nahrungsmittel (12) enthält, gedruckt oder daran befestigt sind;
die Bilddaten (104) zu verarbeiten, um eine Stelle oder Verzerrung der Angaben im dreidimensionalen (3D) Raum zu bestimmen; und
die eine oder mehrere Eigenschaften des Nahrungsmittels (12) mindestens teilweise basierend auf der Stelle oder Verzerrung der Angaben zu bestimmen,
wobei der mindestens eine Prozessor (102) konfiguriert ist, um mindestens teilweise basierend auf einer oder mehreren Eigenschaften des Nahrungsmittels (12) ein Kochprogramm zu generieren, wobei das Kochprogramm mindestens eine Kochzeit und eine Kochtemperatur beinhaltet, und
wobei der mindestens eine Prozessor (102) konfiguriert ist, um die eine oder mehreren Kochkomponenten (116) gemäß dem Kochprogramm zu steuern.

2. Kochgerät (110a) nach Anspruch 1, wobei der mindestens eine Prozessor (102) konfiguriert ist, um die Bilddaten (104) unter Verwendung eines Computer-Vision-Algorithmus zu verarbeiten.

3. Kochgerät (110a) nach Anspruch 1 oder 2, wobei die eine oder mehreren Eigenschaften des Nahrungsmittels (12) mindestens eines von einem Gewicht, einer Dicke, einem Volumen, einer Form und einem Wärmeübergangskoeffizienten der Oberfläche des Nahrungsmittels (12) beinhalten, und wobei der mindestens eine Prozessor (102) konfiguriert ist, um eine oder mehrere Benutzereingabeeigenschaften des Nahrungsmittels (12) zu empfangen, wobei der mindestens eine Prozessor (102) konfiguriert ist, um Eingenschaften des Nahrungsmittels (12) weiter basierend auf der einen oder mehreren Benutzereingabeeigenschaften des Lebensmittels (12) zu bestimmen.

4. Kochgerät (110a) nach Anspruch 1, wobei das Kochgerät (110a) weiter einen oder mehrere Sensoren beinhaltet, um das Lebensmittel (12) beim Kochen zu überwachen, wobei der mindestens eine Prozessor (102) konfiguriert ist, um:
Rückmeldedaten von einem oder mehreren Sensoren zu empfangen; und
das Kochprogramm mindestens teilweise basierend auf den Rückmeldedaten zu modifizieren;
wobei die eine oder mehrere Kochkomponenten (116) von dem mindestens einen Prozessor (102) gemäß dem modifizierten Kochprogramm gesteuert werden.

5. Kochgerät (110a) nach Anspruch 1 oder 4, wobei das Kochgerät (110a) eine Kamera (115) beinhaltet, um die Bilddaten (104) aufzunehmen, und wobei die von der Kamera (115) aufgenommenen Bilddaten (104) ein oder mehrere Bilder des Vakuumbeutels (30) beinhalten.

6. Kochgerät (110a) nach Anspruch 5, wobei der mindestens eine Prozessor (102) der Rechenvorrichtung konfiguriert ist, um:
unter Verwendung mindestens eines Teils der Bilddaten (104) oder eines maschinenlesbaren Codes auf dem Vakuumbeutel (30) eine Beutelkennung zu bestimmen, die den Vakuumbeutel (30) identifiziert; und
unter Verwendung der im Speicher (113a) der Rechenvorrichtung gespeicherten Beutelkennung und Angaben eine planare Darstellung der Angaben zu bestimmen;
wobei der mindestens eine Prozessor (102) der Rechenvorrichtung konfiguriert ist, um die Bilddaten (104) unter Verwendung der planaren Darstellung der Angaben zu verarbeiten, um die Stelle oder Verzerrung der Angaben im 3D-Raum zu bestimmen.

7. Kochgerät (110a) nach Anspruch 6, wobei der mindestens eine Prozessor (102) der Rechenvorrichtung konfiguriert ist, um:
im Speicher (113a) einen Status aufzuzeichnen, der dem Beutel (30) zugeordnet ist und darauf hinweist, dass der Beutel (30) benutzt wurde;
nachfolgende Bilddaten (104) zu empfangen;
basierend auf den nachfolgenden Bilddaten (104) und dem Status zu bestimmen, ob der Vakuumbeutel (30) zuvor verwendet worden ist; und
als Reaktion darauf, dass der Beutel (30) zuvor verwendet worden ist, zu verhindern, dass die eine oder mehreren Kochkomponenten (116) gesteuert werden, um das Nahrungsmittel (12) im Vakuumbeutel (30) zu kochen.

8. Computerimplementiertes Verfahren zur Schätzung einer oder mehrerer Eigenschaften eines Nahrungsmittels (12), umfassend:
Empfangen von Bilddaten (104), die auf Angaben hinweisen, die auf einen Vakuumbeutel (30), das ein Nahrungsmittel (12) enthält, gedruckt oder daran befestigt sind;
Verarbeitung der Bilddaten (104), um eine Stelle oder Verzerrung der Angaben im dreidimensionalen (3D) Raum zu bestimmen; und
Bestimmen der einen oder mehrerer Eigenschaften des Nahrungsmittels (12) mindestens teilweise basierend auf der Stelle oder Verzerrung der Angaben.

9. Verfahren nach Anspruch 8, wobei Verarbeiten der Bilddaten (104) Verwenden eines Computer-Vision-Algorithmus beinhaltet.

10. Verfahren nach Anspruch 8 oder 9, wobei das Verfahren das Aufnehmen der Bilddaten (104) unter Verwendung einer Kamera (115) des Kochgeräts (110a) oder einer Benutzervorrichtung (500a) beinhaltet, und wobei die von der Kamera (115) aufgenommenen Bilddaten (104) ein oder mehrere Bilder des Vakuumbeutels (30) beinhalten.

11. Verfahren nach Anspruch 10, wobei das Verfahren weiter beinhaltet:
Bestimmen unter Verwendung mindestens eines Teils der Bilddaten (104) oder eines maschinenlesbaren Codes auf dem Vakuumbeutel (30) einer Beutelkennung, die den Vakuumbeutel (30) identifiziert; und
Bestimmen unter Verwendung der im Speicher gespeicherten Beutelkennungs- und Angabedaten (113a) einer planaren Darstellung der Angaben;
wobei die Verarbeitung der Bilddaten (104), um eine Stelle oder Verzerrung der Angaben im dreidimensionalen (3D) Raum zu bestimmen, Verarbeiten der Bilddaten (104) unter Verwendung der planaren Darstellung der Angaben umfasst, um die Stelle oder Verzerrung der Angaben im 3D-Raum zu bestimmen.

12. Verfahren nach Anspruch 11, wobei das Verfahren weiter beinhaltet:
Aufzeichnen einen Status, welcher der Beutelkennung zugeordnet ist, wobei der Status darauf hinweist, dass der Beutel (30) benutzt worden ist;
Empfangen nachfolgender Bilddaten (104);
Bestimmen, basierend auf der Beutelkennung des Beutels (30), die in den nachfolgenden Bilddaten (104) erfasst wird, und des Status, ob der Vakuumbeutel (30) zuvor verwendet worden ist; und
als Reaktion darauf, dass der Beutel (30) zuvor verwendet worden ist, Verhindern, dass die eine oder mehrere Kochkomponenten gesteuert werden, um das Nahrungsmittel (12) im Vakuumbeutel (30) zu kochen.

## Revendications

1. Appareil de cuisson (110a) incluant :
un ou plusieurs composants de cuisson (116) ; et
un dispositif informatique pour estimer une ou plusieurs caractéristiques d'un produit alimentaire (12), comprenant :
au moins un processeur (102) ; et
au moins un support non transitoire lisible par processeur (103) stockant des instructions exécutables par processeur qui, lorsqu'elles sont exécutées par le au moins un processeur (102), amènent le au moins un processeur (102) à :
recevoir des données d'image (104) indiquant des indications imprimées ou apposées sur un sac sous vide (30) contenant un produit alimentaire (12) ;
traiter les données d'image (104) pour déterminer un emplacement ou une déformation des indications dans l'espace tridimensionnel (3D) ; et
déterminer les une ou plusieurs caractéristiques du produit alimentaire (12) sur la base, au moins en partie, de l'emplacement ou de la déformation des indications,
dans lequel le au moins un processeur (102) est configuré pour générer un programme de cuisson sur la base, au moins en partie, des une ou plusieurs caractéristiques du produit alimentaire (12), dans lequel le programme de cuisson inclut au moins l'un d'un temps de cuisson et d'une température de cuisson, et
dans lequel le au moins un processeur (102) est configuré pour commander les un ou plusieurs composants de cuisson (116) selon le programme de cuisson.

2. Appareil de cuisson (110a) selon la revendication 1, dans lequel le au moins un processeur (102) est configuré pour traiter les données d'image (104) à l'aide d'un algorithme de vision par ordinateur.

3. Appareil de cuisson (110a) selon la revendication 1 ou 2, dans lequel les une ou plusieurs caractéristiques du produit alimentaire (12) incluent au moins un élément parmi un poids, une épaisseur, un volume, une forme et un coefficient de transfert de chaleur de surface du produit alimentaire (12), et dans lequel le au moins un processeur (102) est configuré pour recevoir une ou plusieurs caractéristiques saisies par l'utilisateur du produit alimentaire (12), dans lequel le au moins un processeur (102) est configuré pour déterminer plus précisément les une ou plusieurs caractéristiques du produit alimentaire (12) en faisant en outre appel aux une ou plusieurs caractéristiques saisies par l'utilisateur du produit alimentaire (12).

4. Appareil de cuisson (110a) selon la revendication 1, dans lequel l'appareil de cuisson (110a) inclut en outre un ou plusieurs capteurs pour surveiller le produit alimentaire (12) pendant la cuisson, dans lequel le au moins un processeur (102) est configuré pour :
recevoir des données de rétroaction provenant des un ou plusieurs capteurs ; et
modifier le programme de cuisson sur la base, au moins en partie, des données de rétroaction ;
dans lequel les un ou plusieurs composants de cuisson (116) sont commandés par le au moins un processeur (102) selon le programme de cuisson tel que modifié.

5. Appareil de cuisson (110a) selon la revendication 1 ou 4, dans lequel l'appareil de cuisson (110a) inclut une caméra (115) pour capturer les données d'image (104), et dans lequel les données d'image (104) capturées par la caméra (115) incluent une ou plusieurs images du sac sous vide (30).

6. Appareil de cuisson (110a) selon la revendication 5, dans lequel le au moins un processeur (102) du dispositif informatique est configuré pour :
déterminer, en utilisant au moins une partie des données d'image (104) ou un code lisible par machine sur le sac sous vide (30), un identifiant de sac permettant d'identifier le sac sous vide (30) ; et
déterminer, en utilisant l'identifiant de sac et les données d'indications stockées en mémoire (113a) du dispositif informatique, une représentation plane des indications ;
dans lequel le au moins un processeur (102) du dispositif informatique est configuré pour traiter les données d'image (104) en utilisant la représentation plane des indications pour déterminer l'emplacement ou la déformation des indications dans l'espace 3D.

7. Appareil de cuisson (110a) selon la revendication 6, dans lequel le au moins un processeur (102) du dispositif informatique est configuré pour :
enregistrer, dans la mémoire (113a), un état associé au sac (30) et indiquant que le sac (30) a été utilisé ;
recevoir des données d'image ultérieures (104) ;
déterminer, sur la base des données d'image ultérieures (104) et de l'état, si le sac sous vide (30) a déjà été utilisé ; et
si le sac (30) a déjà été utilisé, empêcher la commande des un ou plusieurs composants de cuisson (116) visant à cuire le produit alimentaire (12) dans le sac sous vide (30).

8. Procédé mis en œuvre par ordinateur pour estimer une ou plusieurs caractéristiques d'un produit alimentaire (12), comprenant :
la réception de données d'image (104) indiquant des indications imprimées ou apposées sur un sac sous vide (30) contenant un produit alimentaire (12) ;
le traitement des données d'image (104) pour déterminer un emplacement ou une déformation des indications dans l'espace tridimensionnel (3D) ; et
la détermination des une ou plusieurs caractéristiques du produit alimentaire (12) sur la base, au moins en partie, de l'emplacement ou de la déformation des indications.

9. Procédé selon la revendication 8, dans lequel le traitement des données d'image (104) inclut l'utilisation d'un algorithme de vision par ordinateur.

10. Procédé selon la revendication 8 ou 9, dans lequel le procédé inclut la capture des données d'image (104) à l'aide d'une caméra (115) de l'appareil de cuisson (110a) ou d'un dispositif utilisateur (500a) et dans lequel les données d'image (104) capturées par la caméra (115) incluent une ou plusieurs images du sac sous vide (30).

11. Procédé selon la revendication 10, dans lequel le procédé inclut en outre :
la détermination, à l'aide d'au moins une partie des données d'image (104) ou d'un code lisible par machine sur le sac sous vide (30), d'un identifiant de sac permettant d'identifier le sac sous vide (30) ; et
la détermination, à l'aide de l'identifiant de sac et des données d'indications stockées en mémoire (113a), d'une représentation plane des indications ;
dans lequel le traitement des données d'image (104) pour déterminer un emplacement ou une déformation des indications dans l'espace tridimensionnel (3D) inclut le traitement des données d'image (104) à l'aide de la représentation plane des indications pour déterminer l'emplacement ou la déformation des indications dans l'espace 3D.

12. Procédé selon la revendication 11, dans lequel le procédé inclut en outre :
l'enregistrement d'un état associé à l'identifiant de sac, l'état indiquant que le sac (30) a été utilisé ;
la réception des données d'image ultérieures (104) ;
la détermination, sur la base de l'identifiant de sac (30) capturé dans les données d'image ultérieures (104) et de l'état, pour établir si le sac sous vide (30) a déjà été utilisé ; et
si le sac (30) a déjà été utilisé, le fait d'empêcher la commande des un ou plusieurs composants de cuisson visant à cuire le produit alimentaire (12) dans le sac sous vide (30).
